(19) Europäisches Patentamt
European Patent Office
Office européen des brevets

(11) **EP 3 715 083 A1**

(12) **EUROPÄISCHE PATENTANMELDUNG**

(43) Veröffentlichungstag:
**30.09.2020  Patentblatt 2020/40**

(51) Int Cl.:
***B29C 45/14*** (2006.01)

(21) Anmeldenummer: **19165714.7**

(22) Anmeldetag: **28.03.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **LANXESS Deutschland GmbH 50569 Köln (DE)**

(72) Erfinder: **KOCH, Boris 42929 Wermelskirchen (DE)**

(54) **HOHLPROFIL-VERBUNDTECHNOLOGIE**

(57)    Die Erfindung betrifft ein Verfahren zur Herstellung eines Kunststoff-Stahl-Verbundbauteils, auch als Kunststoff-Stahlhohlprofilhybridbauteil (KSV) bezeichnet, aus wenigstens einem Stahlhohlprofil (1), zur Vergrösserung der Oberfläche wird wenigstens ein Stahlverbindungselement (18) auf das Stahlhohlprofil (1) geschweisst, und wenigstens einem, äußerlich mittels Spritzguss oder Formpressen aufzutragenden, Kunststoffauftrag (2) und schubfester sowie formschlüssiger Verbindung des Stahlhohlprofils (1) mit der Kunststoffkomponente in radialer, in rotatorischer, als auch in axialer Richtung vom Stahlhohlprofil (1) aus betrachtet.

Fig.1

EP 3 715 083 A1

## Beschreibung

Die Erfindung betrifft ein Verfahren zur Herstellung eines Kunststoff-Stahl-Verbundbauteils, auch als Kunststoff-Stahlhohlprofilhybridbauteil (KSV) bezeichnet, aus wenigstens einem Stahlhohlprofil und wenigstens einem, äußerlich mittels Spritzguss oder Formpressen aufzutragenden, Kunststoffauftrag und schubfester sowie formschlüssiger Verbindung des Stahlhohlprofils mit der Kunststoffkomponente in radialer, in rotatorischer, als auch in axialer Richtung vom Stahlhohlprofil aus betrachtet.

Vielfach werden Verbundbauteile bereits heute im Kraftfahrzeugbau eingesetzt. In einer Ausführungsform wird dabei ein metallisches Rohrprofil bzw. ein geschlossenes, metallisches Hohlprofil eingesetzt, das mit wenigstens einem separat hergestellten Kunststoffelement verbunden wird. Das Herstellen zweier separater Bauteile, dem zumeist metallischen Rohr- bzw. Hohlprofil einerseits und dem Kunststoffelement andererseits, und schließlich das Verbinden dieser wenigstens zwei Bauteile führt zu erhöhtem Fertigungs- und Montageaufwand. Zum Verbinden des Rohr- bzw. Hohlprofils mit dem oder den Kunststoffelement(en) sind ferner zusätzliche Verbindungsmittel in Form von Schrauben, Muttern, Nieten o.ä. erforderlich, was in der Regel wiederum mehr Bauraum erfordert und zu höherem Gewicht des Verbundbauteils führt.

## Stand der Technik

Aus DE 20 2018 001 599 U1 ist ein Prüfkörper auf Basis der Hohlprofil-Verbundtechnologie bekannt. Dieser Prüfkörper zeichnet sich dadurch aus, dass wenigstens ein zylinderförmiges Hohlprofil von zwei Auslegern in einer gegenüber liegenden Anordnung von 180°, mit Abweichungen im Bereich von +/- 10%, vorzugsweise +/- 5%, insbesondere bevorzugt +/- 1%, ringförmig umformt wird. Die Ausleger sind in der Weise mit dem Hohlprofil verbunden, dass eine hohe Verbundfestigkeit, als auch eine hohe Verbundsteifigkeit in axialer, in radialer und in torsionaler Richtung vom Hohlprofil aus betrachtet erzielt wird. Gemäß einer bevorzugten Ausführungsform der DE 20 2018 001 599 U1 werden sowohl Verbundfestigkeit als auch Verbundsteifigkeit durch wenigstens eine Sicke oder durch wenigstens eine Öffnung im Hohlprofil an den Stellen, wo der Kunststoffauftrag erfolgen soll, verbessert.

Neuere Untersuchungen haben jedoch gezeigt, dass die im Stand der Technik beschriebene Verbundhaftung von Hohlprofilhybridbauteilen, insbesondere unter Dauerbelastungen, nicht immer zufriedenstellend ist. Insbesondere bei Hohlprofilhybridbauteilanwendungen im Kraftfahrzeugbereich, beispielsweise den als Cross Car Beams (CCB) bezeichneten Armaturenträgern / Armaturentafelträgern gemäß WO 2018/114731 A1 oder EP 3 369 544 A1, kommt es bedingt durch Vibrationen oder Wechselbeanspruchungen im Laufe der Lebenszeit eines Kraftfahrzeugs zu Ermüdungen eines solchen Hohlprofilhybridverbunds.

Ausgehend vom Stand der Technik bestand deshalb die Aufgabe der vorliegenden Erfindung darin, die schubfeste und formschlüssige Verbindung eines Stahlhohlprofils mit einer aufzutragenden Kunststoffkomponente in radialer, in rotatorischer, als auch in axialer Richtung, jeweils vom Stahlhohlprofil aus betrachtet, unter Einsatz der im Stand der Technik beschriebenen Hohlprofil-Hybrid-Fertigungstechnologie zu verbessern und damit ein Kunststoff-Stahl-Verbundbauteil mit verbesserter Langzeitstabilität bereitzustellen.

Erfindungsgemäß herzustellende Kunststoff/Stahl basierte Verbundbauteile (KSV) sollen zudem keine Nachteile in der Fertigung und keine Nachteile im Energieaufnahmeverhalten im Vergleich zum Stand der Technik aufweisen, sowie ein hohes Maß an Funktionsintegration im Sinne der System- bzw. Modulbildung bei wirtschaftlicher Fertigung, insbesondere Serienfertigung, sicherstellen.

Überraschenderweise wird diese Aufgabe dadurch gelöst, dass, nicht wie im Stand der Technik beschrieben, durch Sicken oder Öffnungen der Formschluss zwischen den beiden Materialien verbessert wird, sondern ein additiv aufzubringendes Verbindungselement den Formschluss in Weise herbeiführt, dass beide Materialien, Stahlhohlprofil und Kunststoffkomponente, unter Belastung zeitgleich ihren zulässigen Festigkeitsgrenzwert erreichen, ohne dass die Stabilität des Hohlprofils selbst beeinträchtigt wird.

## Erfindung

Die Lösung der Aufgabe ist ein Verfahren zur Herstellung eines Kunststoff-Stahl-Verbundbauteils durch

a) Bereitstellen wenigstens eines, die Oberfläche des in c) bereitzustellenden Stahlhohlprofils vergrößernden Stahlverbindungselements, dessen äußere Abmessungen von Breite $B_{VE}$ und Höhe $H_{VE} \leq$ den äußeren Abmessungen des in h) aufzutragenden Kunststoffauftrags von Breite $B_{KU}$ und $H_{KU}$ sind und dessen Gewicht im Verhältnis zum in c) bereitzustellenden Stahlhohlprofil im Bereich von >100:1 pro kg Stahlhohlprofil liegt und dessen Kontaktfläche zum in h) aufzutragenden Kunststoffauftrag größer ist, als dessen Verbindungsfläche zum in c) bereitzustellenden Stahlhohlprofil;

b) Bereitstellen eines Spritzgieß- bzw. Presswerkzeugs mit wenigstens einer zu öffnenden Kavität und einem Werkzeugmaß A in Schließrichtung und einem Werkzeugmaß B rechtwinklig zur Schließrichtung des Spritzgieß- bzw. Presswerkzeugs und einem Kavitätsumfangsmaß UW, das dem Umfang der Kavität im Bereich der Spritzgieß- bzw. Presswerkzeugmaße A und B entspricht;

c) Bereitstellen wenigstens eines Stahlhohlprofils, vorzugsweise mit einem Verhältnis von Durchmesser zu Wanddicke im Bereich von 5:1 bis 300:1, dessen Stahlhohlprofilaußenmaß C um einen Bereich von 0,1 bis 5% größer ist, als das Werkzeugmaß A, und dessen Stahlhohlprofilaußenmaß D um einen Bereich von 0,1 bis 5% kleiner ist als das Werkzeugmaß B und die Angaben zu C und D sich auf 90° in Richtung zur Längsachse des Stahlhohlprofils gesehen beziehen und dessen Stahlhohlprofilumfangsmaß UH dem Kavitätsumfangsmaß UW der wenigstens einen Presswerkzeug- bzw. Spritzgießwerkzeugkavität UW entspricht;

d) Bereitstellen einer Schweißanlage;

e) Verbinden des wenigstens einen in a) bereitgestellten Stahlverbindungselements mit dem wenigstens einen Stahlhohlprofil an den Stellen, an denen in h) der Kunststoffauftrag erfolgen soll mittels Schweißvorgang mit der in d) bereitgestellten Schweißanlage;

f) Einlegen des nach e) mit wenigstens einem Stahlverbindungselement verbundenen Stahlhohlprofils in die wenigstens eine Kavität des in b) bereitgestellten Spritzgieß- bzw. Presswerkzeugs;

g) Schließen der wenigstens einen Kavität des Spritzgieß- bzw. Presswerkzeugs sowie Verpressen des Stahlhohlprofils mit der Werkzeugschließbewegung in Schließrichtung der wenigstens einen Kavität, wobei eine Formänderung des in c) bereitgestellten Stahlhohlprofils stattfindet und die Außenfläche des Stahlhohlprofils nach Beendigung des Schließvorgangs der Innenform der Kavität des in b) bereitgestellten Spritzgieß- bzw. Presswerkzeugs im Bereich der Kontaktflächen an den axialen Enden der wenigstens einen Kavität entspricht, wobei das Stahlhohlprofilumfangsmaß UH gleich dem Kavitätsumfangsmaß UW bleibt;

h) äußeres Auftragen eines Kunststoffauftrags in Form einer Schmelze mit einem Druck im Bereich von 1 bar bis 1000 bar auf das Stahlhohlprofil an der Position des wenigstens einen Verbindungselements;

i) Abkühlen des auf das Stahlhohlprofil in h) aufgebrachten Kunststoffauftrags (Solidifikation), und

j) Entnehmen des fertigen Kunststoff-Stahl-Verbundbauteils aus dem Spritzgieß- bzw. Presswerkzeug.

Überraschenderweise erhält man nach dem erfindungsgemäßen Verfahren ein Kunststoff-Stahl-Verbundbauteil (KSV) mit schubfester und formschlüssiger Verbindung der Metallkomponente und der Kunststoffkomponente in radialer, rotatorischer, als auch axialer Richtung vom Stahlhohlprofil aus betrachtet, die insbesondere den Einsatz solcher KSVs in sicherheitsrelevanten Bereichen wie Kraftfahrzeugen erlaubt und eine Langzeitstabilität gewährleistet. Durch das in Verfahrensschritt a) bereitgestellte wenigstens eine Stahlverbindungselement, das in Verfahrensschritt e) mit dem Stahlhohlprofil verbunden wird, erzielt man überraschenderweise eine deutlich höhere Kraftübertragung von der in Verfahrensschritt h) aufgetragenen Kunststoffkomponente in das Stahlhohlprofil, als das nach dem Stand der Technik bislang möglich war ohne eine Schwächung des Stahlhohlprofils durch Löcher oder Sicken. Die belasteten Kontaktflächen zwischen der Kunststoffkomponente und dem wenigstens einen Stahlverbindungselement können so groß dimensioniert werden, dass die Druckfestigkeit oder aber die Scherfestigkeit des Kunststoffs nicht überschritten und die Scherfestigkeit des Schweißpunktes erreicht wird. Im Idealfall entsprechen die belastete(n) Kontaktfläche/n oder aber die belasteten Scherflächen von Kunststoff zu Verbindungselement/en und Hohlprofil zu Verbindungselement/en einem Verhältnis, das exakt dem Verhältnis von zulässiger Scherfestigkeit T der entsprechenden Stahlgüte des Hohlprofils zu zulässiger Druckfestigkeit σ oder aber zulässiger Scherfestigkeit der entsprechenden Kunststoffgüte entspricht. In diesem Fall gilt:

$$\frac{A_{\text{Kontakt Kunststoff-Verbindungselement}}}{A_{\text{Schweißkontakt Verbindungselement-Hohlprofil}}} = \frac{\text{zul.}\tau_{\text{Stahl}}}{\text{zul. }\sigma_{\text{Kunststoff}}} \text{ oder}$$

$$\frac{A_{\text{Scherfläche Kunststoff-Verbindungselement}}}{A_{\text{Schweißkontakt Verbindungselement-Hohlprofil}}} = \frac{\text{zul.}\tau_{\text{Stahl}}}{\text{zul. }\tau_{\text{Kunststoff}}}$$

Die Werte zu T und σ kann der Fachmann den entsprechenden Produktdatenblättern oder den technischen Produktinformationsschriften zum jeweiligen, erfindungsgemäß einzusetzenden Produkt der Stahl- und Kunststoffhersteller entnehmen.

Überraschend ist zudem, dass das erfindungsgemäße Verfahren durch die in Verfahrensschritt b) beschriebenen Werkzeugmaße A und B und der darauf abgestimmten und in Verfahrensschritt c) beschriebenen Stahlhohlprofilmaße C und D ein Einlegen des Stahlhohlprofils mit Stahlverbindungselement(en) ins Spritzgieß- bzw. Presswerkzeug mit ausreichend Spiel erlaubt und trotzdem mit der Vorgabe gleicher Umfangsmaße von Kavitätsumfang UW und von Stahlhohlprofilumfang UH beim Schließen der wenigstens einen Kavität des Spritzgieß- bzw. Presswerkzeugs eine Abdichtung der wenigstens einen Kavität für einen auf das Stahlhohlprofil aufzutragenden Kunststoffauftrag sowie ggf. dessen Verteilung äußerlich um das Stahlhohlprofil herum im Verfahrensschritt h) ermöglicht.

Ausreichend Spiel in Sinne der vorliegenden Erfindung bedeutet, dass das Kleinstmaß der Spritzgießwerkzeugkavität bzw. Presswerkzeugkavität, rechtwinklig zur Schließrichtung des Werkzeugs gesehen, größer, im Grenzfall auch gleich groß, wie das toleranzbehaftete Außenmaß des Stahlhohlprofilquerschnitts, ebenfalls rechtwinklig zur Schließrichtung des Werkzeugs gesehen, ist. Vorzugsweise verhält sich deshalb das Kleinstmaß der Spritzgießwerkzeugkavität bzw. Presswerkzeugkavität im Bereich von 100 bis 105% zum Außenmaß des Stahlhohlprofilquerschnitts, insbesondere 102%, jeweils senkrecht zur Schließrichtung des Werkzeugs gesehen.

Überraschenderweise funktioniert das mit ausreichend Spiel vorgesehene Einlegen des Stahlhohlprofils ins Spritzgießwerkzeug bzw. Presswerkzeug und das Abdichten der wenigstens einen Kavität für einen als Schmelze auf das Stahlhohlprofil aufzutragenden Kunststoffauftrag sowie ggf. dessen Verteilung äußerlich um das Stahlhohlprofil herum, auch wenn das Stahlhohlprofilumfangsmaß UH gegenüber dem Kavitätsumfangsmaß UW der Spritzgieß- bzw. Presswerkzeugkavität um bis zu + 5% abweicht.

Überraschenderweise erlaubt das erfindungsgemäße Verfahren zudem die Herstellung von KSVs aus einem Stahlhohlprofil ohne ein dem Spritzdruck bzw. Pressdruck im Innern des Stahlhohlprofils entgegenwirkendes Hilfsmittel und ohne die Verwendung werkzeugtechnischer Operationen oder die Verwendung eines zusätzlich anzuwendenden Innen(hoch)drucks gemäß WO 2009/077026 A1, um eine Abdichtung zwischen dem erfindungsgemäß einzusetzenden, toleranzbehafteten Stahlhohlprofil mitsamt Stahlverbundelement(en) und dem Spritzgießwerkzeug bzw. Presswerkzeug herzustellen, gleichfalls aber genügend Unterstützung derart bereitzustellen, dass der äußerlich aufgebrachte Kunststoffauftrag formschlüssig, schubfest und schubsteif mit dem Stahlhohlprofil verbunden wird, indem von einem Außenflächenabschnitt des Stahlhohlprofils von X = 100%, mehr als 50%, vorzugsweise 75 bis 100%, besonders bevorzugt 90 bis 100%, mit Kunststoff verbunden werden. Vorzugsweise erfolgt erfindungsgemäß der Kunststoffauftrag durch Anspritzen, Umspritzen, Überspritzen, Anpressen oder Umpressen. Die Abdichtung zur wenigstens einen Kavität des Spritzgießwerkzeugs bzw. Presswerkzeugs erfolgt erfindungsgemäß durch die in Verfahrensschritt g) beschriebene Verpressung des Stahlhohlprofils selber.

Erfindungsgemäß erzielt man überraschenderweise eine formschlüssige Verbindung in Form eines Hybridbauteils durch Umspritzen des Stahlhohlprofils mit Kunststoff, wobei eine Blockierung folgender Freiheitsgrade erfolgt:

- radial in alle Richtungen um die Mittelachse des Stahlhohlprofils herum,

- rotatorisch um eine Achse rechtwinklig zur Mittelachse des Stahlhohlprofils, sowie

- axial in Richtung der Mittelachse des Stahlhohlprofils.

Für eine zusätzliche Blockierung rotatorisch um die Mittelachse herum und translatorisch in Richtung der Mittelachse des Stahlhohlprofils bedarf es in einer bevorzugten oder alternativen Ausführungsform einer formschlüssigen oder adhäsiven Verbindung von Stahlhohlprofil und angespritztem Kunststoff durch eine Oberflächenbehandlung der äußeren Oberfläche des Stahlhohlprofils.

Zur Klarstellung sei angemerkt, dass alle aufgeführten, allgemeinen oder in Vorzugsbereichen genannten Definitionen und Parameter in beliebigen Kombinationen umfasst sind. Im Rahmen dieser Anmeldung zitierte Normen gelten in der zum Anmeldetag gültigen Fassung.

Verpressen im Verfahrensschritt g) bedeutet ein Verformen des Stahlhohlprofils bei dem keine Umfangserweiterung des Stahlhohlprofilumfangsmaßes UH, sondern nur eine Formänderung des Stahlhohlprofils herbeigeführt wird. Bei einem toleranzbedingten Übermaß des Stahlhohlprofilumfangs UH wird vorzugsweise eine Formänderung herbeigeführt, verbunden mit einer geringfügigen Stauchung bzw. Umfangsreduzierung des Stahlhohlprofilumfangsmaßes UH gegen Ende der Werkzeugschließbewegung.

Die Schubfestigkeit ist eine Stoffkonstante, die den Widerstand eines Werkstoffs gegen Abscherung beschreibt, also gegen eine Trennung durch Kräfte, die zwei einander anliegende Flächen längs zu verschieben suchen. Die Schubfestigkeit wird bestimmt durch den Schubmodul, auch Gleitmodul genannt. Schubfest miteinander verbunden bedeutet im Sinne der vorliegenden Erfindung eine in axialer Richtung, vorzugsweise in axialer und radialer Richtung, des Stahlhohlprofils schubsteife, formschlüssige Verbindung des Stahlhohlprofils mit wenigstens einem auf dem Stahlhohlprofil aufgebrachten Kunststoffelement.

Die Schubsteifigkeit ist das Produkt aus dem Schubmodul *G* eines Werkstoffs und der Querschnittsfläche *A*. Es gilt:

$$\text{Schubsteifigkeit} = G \cdot A \cdot \kappa \; (= G \cdot A_s)$$

Der querschnittsabhängige Korrekturfaktor *K* berücksichtigt dabei die über den Querschnitt ungleichförmige Verteilung der Schubspannung $\tau$. Oft wird die Schubsteifigkeit auch mithilfe der Schubfläche $A_s$ ausgedrückt. Siehe: **https://de.wikipedia.org/wiki/Steifigkeit.**

Formschlüssige Verbindungen im Sinne der vorliegenden Erfindung entstehen durch das Ineinandergreifen von mindestens zwei Verbindungspartnern, die eine nichtlösbare Verbindung miteinander eingehen und sich nur durch Zerstören voneinander wieder trennen.

Siehe: **https://de.wikipedia.org/wiki/Verbindungstechnik.**

Gegenstand der vorliegenden Erfindung ist zudem ein Stahlhohlprofilhybridbauteil umfassend wenigstens ein durch Schweißen aufgetragenes Stahlverbindungselement und wenigstens einen an den Positionen des wenigstens einen Stahlverbindungselements durch Spritzguss oder Aufpressen aufgebrachten Kunststoffauftrag mit einer Blockierung der Freiheitsgrade radial in alle Richtungen um die Mittelachse des Stahlhohlprofils herum, rotatorisch um eine Achse rechtwinklig zur Mittelachse des Stahlhohlprofils und axial in Richtung der Mittelachse des Stahlhohlprofils.

**Bevorzugte Ausführungsformen der Kunststoff-Stahlhohlprofilhybridbauteile**

Bevorzugte Kunststoff-Stahlhohlprofilhybridbauteile (KSVs) gemäß der vorliegenden Erfindung sind Kraftfahrzeugbauteile, besonders bevorzugt Cross Car Beams.

Die Erfindung betrifft auch die Verwendung eines Stahlhohlprofilhybridbauteils umfassend wenigstens ein durch Schweißen aufgetragenes Stahlverbindungselement und wenigstens einen an den Positionen des wenigstens einen Stahlverbindungselements durch Spritzguss oder Aufpressen aufgebrachten Kunststoffauftrag mit einer Blockierung der Freiheitsgrade radial in alle Richtungen um die Mittelachse wenigstens eines Stahlhohlprofils herum, rotatorisch um eine Achse rechtwinklig zur Mittelachse des wenigstens einen Stahlhohlprofils und axial in Richtung der Mittelachse des wenigstens einen Stahlhohlprofils, als Kraftfahrzeugbauteil, insbesondere Cross Car Beam.

Die Erfindung betrifft auch die Verwendung erfindungsgemäß zu fertigender Stahlhohlprofilhybridbauteile (KSVs) als Kraftfahrzeugbauteil, insbesondere Cross Car Beams.

Vorzugsweise weist wenigstens ein erfindungsgemäß einzusetzendes Stahlhohlprofil ein Durchmesser/Wanddickenverhältnis im Bereich von 5:1 bis 300:1 auf.

Vorzugsweise weist wenigstens ein erfindungsgemäß einzusetzendes Stahlhohlprofil einen Durchmesser im Bereich von 2 bis 10cm auf, besonders bevorzugt im Bereich von 3 bis 5cm auf. Abweichungen vom Durchmesser im Bereich von +/- 3% liegen im Bereich von Fertigungstoleranzen.

Vorzugsweise weist wenigstens ein erfindungsgemäß einzusetzendes Stahlhohlprofil eine Wanddicke im Bereich von 0,1 bis 10mm auf.

Vorzugsweise weist wenigstens ein erfindungsgemäß einzusetzendes Stahlhohlprofil eine Länge im Bereich von 10 bis 250cm, besonders bevorzugt im Bereich von 15 bis 100cm, insbesondere bevorzugt im Bereich von 20 bis 40cm auf.

Vorzugsweise weist wenigstens ein erfindungsgemäß einzusetzendes Stahlhohlprofil wenigstens zwei Öffnungen, insbesondere jeweils eine Öffnung an den Stirnseiten, auf.

Vorzugsweise umgibt der Kunststoffauftrag das wenigstens eine Stahlhohlprofil des erfindungsgemäßen Stahlhohlprofilhybridbauteils in Form eines geschlossenen Rings.

Weitere bevorzugte Ausführungsformen erfindungsgemäßer Stahlhohlprofilhybridbauteile bzw. erfindungsgemäß einzusetzender Stahlhohlprofile werden im Rahmen der Diskussion der einzelnen Verfahrensschritte benannt.

**Bevorzugte Ausführungsformen des Fertigungsverfahrens**

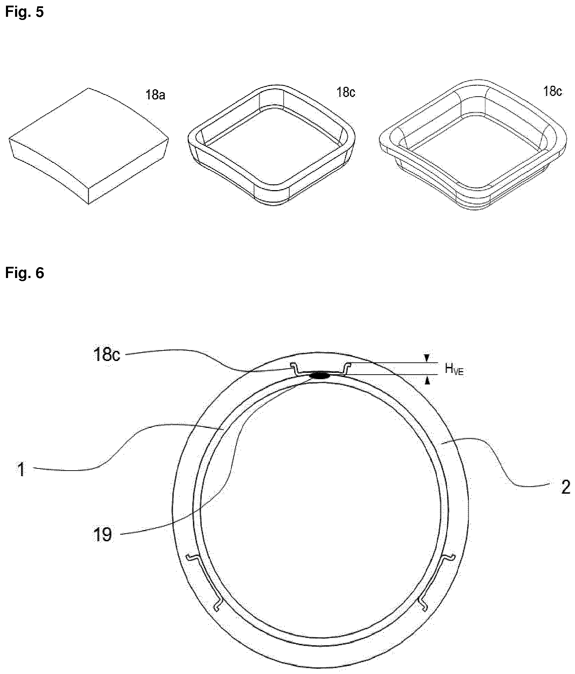

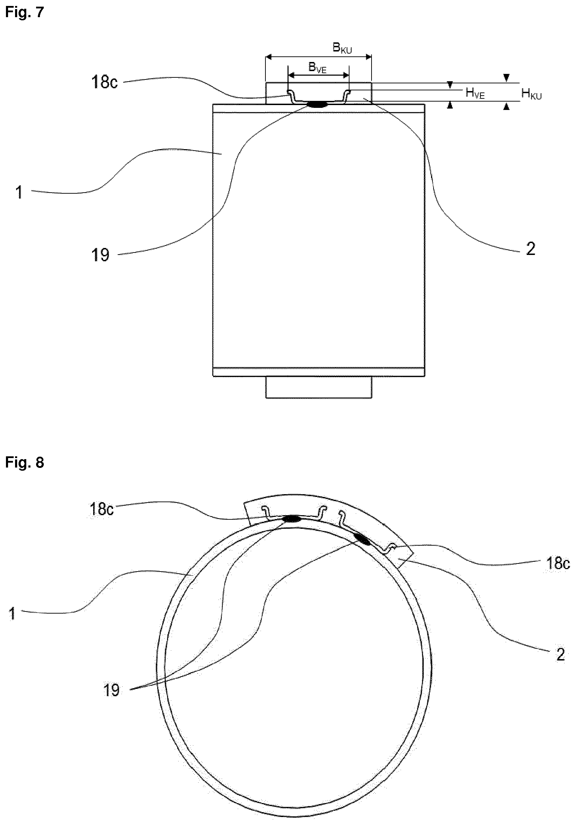

Vorzugsweise wird in Verfahrensschritt a) wenigstens ein Stahlverbindungselement bereitgestellt, dessen äußere Abmessungen Stahlverbindungselements (Breite $B_{VE}$ und Höhe $H_{VE}$) um 20% bis 50% kleiner als die äußeren Abmessungen des in h) aufzutragenden Kunststoffauftrags (Breite $B_{KU}$ und $H_{KU}$) sind. Siehe hierzu **Fig. 6** und **Fig. 7**.

Vorzugsweise wird im Verfahrensschritt d) eine Schweißanlage eingesetzt, die nach wenigstens einem Verfahren der Reihe Widerstandspunktschweißen, Metall-Schutzgaspunktschweißen, Metall-Inertgasschweißen (MIG), dem Metall-Aktivgasschweißen (MAG), oder dem Metall-Lichtbogenpressschweißen funktioniert.

Vorzugsweise wird vor oder nach dem Verfahrensschritt c) das Stahlhohlprofil an wenigstens einer Position durch das Einwirken zusätzlicher Biegekräfte an Positionen, an denen kein Kunststoffauftrag erfolgt, verformt. Vorzugsweise lässt man diese zusätzlichen Biegekräfte einwirken, wenn die endgültige Verbundbauteilform von der Form eines in Verfahrensschritt c) bereitzustellenden Stahlhohlprofils, vorzugsweise eines Stahlhohlprofils in gerader Rohrform / Hohlzylinderform, abweicht.

Vorzugsweise wird in Verfahrensschritt h) ein Druck im Bereich von 10 bar und 500bar, besonders bevorzugt ein Druck im Bereich von 50 bar bis 300 bar angewandt.

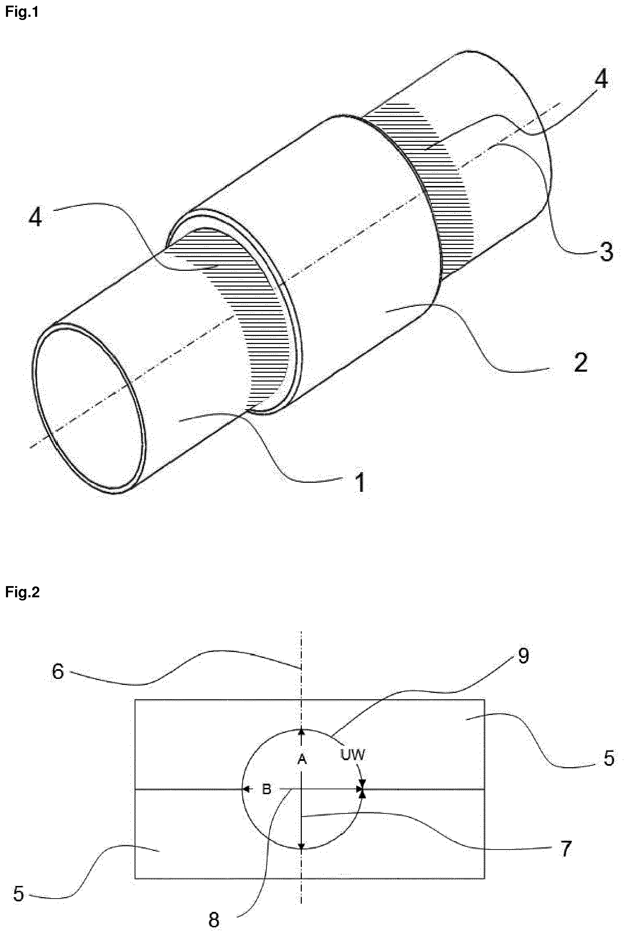

Die vorliegende Erfindung wird anhand der **Fig. 1 ,Fig. 2, Fig. 3, Fig. 4, Fig. 5, Fig. 6, Fig. 7 und Fig. 8** erläutert:

**Fig. 1** zeigt ein erfindungsgemäß herzustellendes Verbundbauteil nach dem Spritzgießverfahren bzw. Pressverfahren, worin (**1**) für das Stahlhohlprofil, hier in der Ausführungsform eines Rohres mit einer ellipsenförmigen Querschnittsform, und (**2**) für einen mit dem Stahlhohlprofil formschlüssig oder adhäsiv verbundenen Kunststoffauftrag steht. (**3**) zeigt die Längsachse des Stahlhohlprofils. (**4**) zeigt die Kontaktflächen zur Abdichtung, die sich neben dem Kunststoffauftrag (**2**) auf dem Stahlhohlprofil, im Bereich 1,0 - 10,0mm, in Richtung der Längsachse (**3**) gesehen, befinden.

**Fig. 2** zeigt den Querschnitt eines erfindungsgemäß einzusetzenden Spritzgießwerkzeugs bzw. Presswerkzeugs (**5**) in geschlossenem Zustand mit der Öffnungs- und Schließrichtung (**6**) im Bereich der Kontaktflächen zur Abdichtung (**4**) die sich neben dem Kunststoffauftrag (**2**) auf dem Stahlhohlprofil, im Bereich von 1,0 - 10,0mm in Richtung der Längsachse des Stahlhohlprofils (**3**) gesehen, befinden. (**7**) zeigt das Werkzeugmaß A der Werkzeugkavität in Schließrichtung gesehen. (**8**) zeigt das Werkzeugmaß B der Werkzeugkavität rechtwinklig zur Schließrichtung gesehen und (**9**) das Kavitätsumfangsmaß UW im Bereich von Werkzeugmaß A und B.

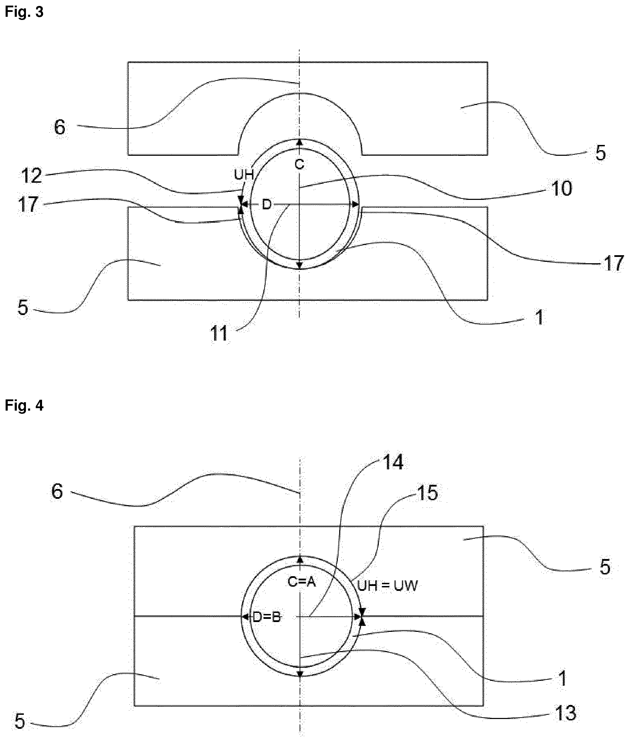

**Fig. 3** zeigt den Querschnitt eines geöffneten Spritzgießwerkzeugs bzw. Presswerkzeugs (**5**) mit eingelegtem Stahlhohlprofil (**1**) im Bereich der Kontaktflächen zur Abdichtung (**4**), die sich neben dem Kunststoffauftrag (**2**) auf dem Stahlhohlprofil (**1**), im Bereich von 1.0 - 10,0mm in Richtung der Längsachse des Stahlhohlprofils (**3**) (siehe **Fig. 1**) gesehen befinden. (**10**) zeigt das Außenmaß C des Stahlhohlprofils (**1**) in Schließrichtung gesehen. (**11**) zeigt das Außenmaß D des Stahlhohlprofils (**1**) und (**12**) zeigt das Stahlhohlprofilumfangsmaß UH des Stahlhohlprofils (**1**) im Bereich des Stahlhohlprofilmaß C und D. (**17**) zeigt das Spiel zwischen Stahlhohlprofil und Werkzeugkavität.

**Fig. 4** zeigt den Querschnitt eines erfindungsgemäß einzusetzenden Spritzgießwerkzeugs bzw. Presswerkzeugs (**5**) in geschlossenem Zustand mit eingelegtem Stahlhohlprofil (**1**) im Bereich der Kontaktflächen zur Abdichtung (**4**), die sich neben dem Kunststoffauftrag (**2**) auf dem Stahlhohlprofil (**1**), im Bereich von 1,0 bis 10,0mm in Richtung der Längsachse (**3**) (siehe **Fig. 1**) gesehen, befindet. (**13**) steht für das Außenmaß C des verspressten Stahlhohlprofils (**1**) im Bereich der Kontaktflächen zur Abdichtung (**4**), die sich neben dem Kunststoffauftrag (**2**) auf dem Stahlhohlprofil (**1**), im Bereich von 1,0 bis 10,0mm in Richtung von dessen Längsachse (**3**) gesehen, befindet. Nach dem Verpressen in Verfahrensschritt g) ist das Außenmaß C gleich dem Werkzeugmaß A. (**14**) steht für das Außenmaß D des verspressten Stahlhohlprofils (**1**) im Bereich der Kontaktflächen zur Abdichtung (**4**), die sich neben dem Kunststoffauftrag (**2**) auf dem Stahlhohlprofil (**1**), im Bereich von 1,0 bis 10,0mm in Richtung von dessen Längsachse (**3**) gesehen, befindet. Nach dem Verpressen in Verfahrensschritt g) ist das Außenmaß B gleich dem Werkzeugmaß D. (**15**) steht für das Stahlhohlprofilumfangsmaß UH des verspressten Stahlhohlprofils (**1**) im Bereich der Kontaktflächen zur Abdichtung (**4**), die sich neben dem Kunststoffauftrag (**2**) auf dem Stahlhohlprofil (**1**), im Bereich von 1,0 bis 10,0mm, in Richtung von dessen Längsachse (**3**) gesehen, befinden. Nach dem Verpressen in Verfahrensschritt g) ist das Stahlhohlprofilumfangsmaß UH gleich dem Kavitätsumfangsmaß UW im Bereich von Werkzeugmaß C und D.

**Fig. 5** zeigt eine Variation möglicher Beispiele für erfindungsgemäß einzusetzende Stahlverbindungselemente (**18**) in Form von (**18a**) kompakt, in Form von (**18b**) schalenförmig und in Form von (**18c**) schalenförmig mit Kragen. Die hier dargestellten quadratischen Formen sind nur beispielhaft. Die Stahlverbindungselemente können genauso gut ringförmig, oval, rautenförmig, trapezförmig oder in sonstiger Weise ausgeformt sein und dabei einen Kragen aufweisen oder nicht. Die Ränder der Schalen oder die Krägen können unterbrochen sein. Die in **Fig. 5** dargestellten Varianten sind nur beispielhaft und nicht limitierend anzusehen.

**Fig. 6** zeigt eine Ausführungsform eines Stahlhohlprofils (**1**) im Schnitt mit drei aufgeschweißten Stahlverbindungselementen in der Ausführungsform (**18c**) und deren Schweißpunkt (**19**) nach erfolgten Kunststoffauftrag (**2**).

**Fig. 7.** Zeigt einen erfindungsgemäßen Stahlhohlprofilgrundkörper im Schnitt auf Basis eines Stahlhohlprofils (**1**) mit einem bereits in Kunststoffauftrag (**2**) umspritzten Stahlverbindungselement in der Ausführungsform (**18c**) sowie mit angedeutetem Schweißpunkt (**19**) mit den Breiten und Höhenabmessungen des Verbindungselements (18c) $B_{VE}$ und $H_{VE}$ und den Breiten und Höhenabmessungen des Kunststoffauftrags $B_{KU}$ und $H_{KU}$.

**Fig. 8** zeigt ein Stahlhohlprofil in einer alternativen Ausführungsform zweier aufgeschweißter Stahlverbindungselemente in der Ausführungsform (**18c**) innerhalb eines, das Stahlhohlprofil (**1**) nur partiell und nicht vollständig ringförmig umgebenden Kunststoffauftrags (**2**) und den angedeuteten Schweißpunkten (**19**). In der Ausführungsform der Darstellung gemäß **Fig. 8** unter Einsatz wenigstens eines, vorzugsweise zweier Stahlverbindungselemente der Variante (18c) eines erfindungsgemäß einzusetzenden Verbindungselements (**18**) erzielt man überraschenderweise eine schubfeste und formschlüssige Verbindung der Kunststoffkomponente und des Stahlhohlprofils in radialer, als auch rotatorischer, als auch axialer Richtung, **ohne** das Stahlhohlprofil vollumfänglich mit einem Kunststoffauftrag zu versehen.

Vorzugsweise betrifft die Erfindung ein Verfahren zur Herstellung eines Kunststoff-Stahl Verbundbauteils durch

    a) Bereitstellen wenigstens eines, die Oberfläche des in c) bereitzustellenden Stahlhohlprofils (1) vergrößernden Stahlverbindungselements (**18**), dessen äußere Abmessungen von Breite $B_{VE}$ und Höhe $H_{VE} \leq$ den äußeren Abmessungen des in h) aufzutragenden Kunststoffauftrags von Breite $B_{KU}$ und $H_{KU}$ sind und dessen Gewicht im Verhältnis zum in c) bereitzustellenden Stahlhohlprofil (**1**) im Bereich von >100:1 pro kg Stahlhohlprofil liegt und dessen Kontaktfläche zum in h) aufzutragenden Kunststoffauftrag (**2**) größer ist, als dessen Verbindungsfläche zum in c) bereitzustellenden Stahlhohlprofil (**1**);

b) Bereitstellen eines Spritzgießwerkzeugs bzw. Presswerkzeugs (**5**) mit wenigstens einer zu öffnenden Kavität und einem Werkzeugmaß A (**7**) in Schließrichtung und einem Werkzeugmaß B (**8**) rechtwinklig zur Schließrichtung des Spritzgießbzw. Presswerkzeugs und einem Kavitätsumfangsmaß UW (**9**), das dem Umfang der Kavität im Bereich der Spritzgießwerkzeugmaße bzw. Presswerkzeugmaße A und B entspricht;

c) Bereitstellen wenigstens eines Stahlhohlprofils (**1**), vorzugsweise mit einem Verhältnis von Durchmesser zu Wanddicke im Bereich von 5:1 bis 300:1, dessen Stahlhohlprofilaußenmaß C (**10**) um einen Bereich von 0,1 bis 5% größer ist als das Werkzeugmaß A (**7**), und dessen Stahlhohlprofilaußenmaß D (**11**) um einen Bereich von 0,1 bis 5% kleiner ist als das Werkzeugmaß B (**8**) und die Angaben zu C und D sich auf 90° in Richtung zur Längsachse (**3**) des Stahlhohlprofils (**1**) gesehen beziehen und dessen Stahlhohlprofilumfangsmaß UH (**12**) dem Kavitätsumfangsmaß UW (**9**) der wenigstens einen Presswerkzeugkavität bzw. Spritzgießwerkzeugkavität UW entspricht;

d) Bereitstellen einer Schweißanlage;

e) Verbinden des wenigstens einen in a) bereitgestellten Stahlverbindungselements (**18**) mit dem wenigstens einen Stahlhohlprofil (**1**) an den Stellen, an denen in h) der Auftrag von Kunststoff (**2**) erfolgen soll mittels der in d) bereitgestellten Schweißanlage;

f) Einlegen des mit wenigstens einem Stahlverbindungselement (**18**) verbundenen Stahlhohlprofils (**1**) in die wenigstens eine Kavität des in b) bereitgestellten Spritzgießwerkzeugs bzw. Presswerkzeugs (**5**);

g) Schließen der wenigstens einen Kavität des Spritzgießwerkzeugs bzw. Presswerkzeugs (**5**) sowie Verpressen des Stahlhohlprofils (**1**) mit der Werkzeugschließbewegung in Schließrichtung der wenigstens einen Kavität, wobei eine Formänderung des in c) bereitgestellten Stahlhohlprofils (**1**) stattfindet und die Außenfläche des Stahlhohlprofils (**1**) nach Beendigung des Schließvorgangs der Innenform der Kavität des in b) bereitgestellten Spritzgießwerkzeugs bzw. Presswerkzeugs (**5**) im Bereich der Kontaktflächen an den axialen Enden der wenigstens einen Kavität entspricht, wobei das Stahlhohlprofilumfangsmaß UH (**12**) gleich dem Kavitätsumfangsmaß UW (**9**) bleibt;

h) äußeres Auftragen eines Kunststoffauftrags (**2**) in Form einer Schmelze mit einem Druck im Bereich von 1 bar bis 1000 bar auf das Stahlhohlprofil (**1**) an der Position des wenigstens einen Verbindungselements (**18**);

i) Abkühlen des auf das Stahlhohlprofil (**1**) in h) aufgebrachten Kunststoffauftrags (**2**) (Solidifikation), und

j) Entnehmen des fertigen Kunststoff-Stahl-Verbundbauteils aus dem Spritzgieß- bzw. Presswerkzeug (**5**).

**Verfahrensschritt a)** Verfahrensschritt a) betrifft das Bereitstellen wenigstens eines Stahlverbindungselements mit dem Ziel, durch seine Form eine eventuelle rotatorische, als auch translatorische Bewegung des in Verfahrensschritt h) auf das Stahlhohlprofil aufzutragenden Kunststoffauftrags zu blockieren. Im erfindungsgemäßen KSV weist ein Verbindungselement eine größere Kontaktfläche zum Kunststoffauftrag auf, als dessen Verbindungsfläche zum Stahlhohlprofil darstellt. Im Idealfall wird dabei erzielt:

$$\frac{A_{\text{Kontakt Kunststoff-Verbindungselement}}}{A_{\text{Verbindungsfläche Verbindungselement-Hohlprofil(Schweißpunkt)}}} = \frac{\text{zul.}\tau_{\text{Stahl}}}{\text{zul.}\sigma_{\text{Kunststoff}}} \text{ oder}$$

$$\frac{A_{\text{Scherfläche Kunststoff-Verbindungselement}}}{A_{\text{Verbindungsfläche Verbindungselement-Hohlprofil (Schweißpunkt)}}} = \frac{\text{zul.}\tau_{\text{Stahl}}}{\text{zul.}\tau_{\text{Kunststoff}}}$$

Vorzugsweise hat ein erfindungsgemäß einzusetzendes Stahlverbindungselementes eine Masse im Bereich von 0,1g bis 10g, besonders bevorzugt im Bereich von 0,3 bis 2g und ganz besonders bevorzugt im Bereich von 0,5 bis 1g. Insbesondere bevorzugt wird die Masse von 1g nicht überschritten.

Mögliche Varianten für erfindungsgemäß einzusetzende Stahlverbindungselemente sind kompakte, aus Stahlblech gestanzte, schalenförmig oder schalenförmig mit Kragen, aus Stahlblech tiefgezogene oder gestanzte Ausführungsformen. Die in **Fig. 5** dargestellten quadratischen Formen sind bevorzugt bzw. nur beispielhaft. In weiteren bevorzugten Ausführungsformen sind erfindungsgemäß einzusetzende Stahlverbindungselemente ringförmig, oval, rautenförmig, trapezförmig. Vorzugsweise weisen diese Ausführungsformen einen Kragen auf. In einer bevorzugten Ausführungsform können die Ränder der Schalen oder die Krägen unterbrochen sein.

Vorzugsweise wird für ein Stahlverbindungselement derselbe Stahl eingesetzt wie im Stahlhohlprofil.

**Verfahrensschritt b)**

Verfahrensschritt b) betrifft das Bereitstellen eines Spritzgießwerkzeugs bzw. Presswerkzeugs mit wenigstens einer zu öffnenden Kavität und einem Werkzeugmaß A in Schließrichtung und einem Werkzeugmaß B rechtwinklig zur Schließrichtung des Werkzeugs und einem Kavitätsumfangsmaß UW, das dem Umfang der wenigstens einen Kavität im Bereich der Werkzeugmaße A und B entspricht. Die Schließrichtung bezieht sich erfindungsgemäß auf das einzusetzende Spritzgießwerkzeug bzw. Presswerkzeug. Vorzugsweise weist ein erfindungsgemäß einzusetzendes Spritzgießwerkzeug bzw. Presswerkzeug zwei Werkzeughälften auf. Je nach Ausgestaltung des zu fertigenden Kunststoff-Stahl-Verbundbauteils können aber die Werkzeughälften wiederum aus mehreren Segmenten bestehen. Der Fachmann wird die Auslegung des einzusetzenden Spritzgießwerkezugs bzw. Presswerkzeugs entsprechend dem zu fertigenden Kunststoff-Stahl-Verbundbauteil anpassen. Eine Zusammenfassung erfindungsgemäß einzusetzender Spritzgießwerkzeuge bzw. Presswerkzeuge sowie zu Herstellern derselben findet sich u.a. in W. Michaeli, G. Menges, P. Mohren, Anleitung zum Bau von Spritzgießwerkzeugen, 5. völlig überarbeitete Auflage, Carl Hanser Verlag München Wien 1999 (englische Ausgabe 2001).

Vorzugsweise weist ein erfindungsgemäß einzusetzendes Spritzgießwerkzeug bzw. Presswerkzeug folgende Merkmale auf, damit sich ein erfindungsgemäß einzusetzendes Stahlhohlprofil mit all seinen Maß- und Formtoleranzen ohne Zwang in das Spritzgießwerkzeug bzw. Presswerkzeug einlegen lässt:

> **bI.** Das Spritzgießwerkzeug bzw. Presswerkzeug muss so beschaffen sein, dass es die Spritzgießwerkzeugkavitäten bzw. Presswerkzeugkavitäten zu den Bereichen des Stahlhohlprofils, in denen in Verfahrensschritt h) kein Kunststoffauftrag erfolgen wird, beim Schließen des Werkzeugs abdichtet. Dazu sind im Spritzgießwerkzeug bzw. Presswerkzeug an den axialen Enden der Spritzgießwerkzeugkavitäten bzw. Presswerkzeugkavitäten Kontaktflächen im Werkzeug notwendig, die das Stahlhohlprofil während des Schließens des Werkzeugs von dessen Stahlhohlprofilaußenmaß C auf das Werkzeugmaß A verpressen, wodurch sich gleichzeitig das Stahlhohlprofilaußenmaß D auf das Werkzeugmaß B ändert und wobei das Stahlhohlprofilumfangsmaß UH gleich dem Kavitätsumfangsmaß UW der wenigstens einen Spritzgießwerkzeugkavität bzw. Presswerkzeugkavität bleibt;

> **bII.** In einer Ausführungsform sind die Kontaktflächen der wenigstens zwei Werkzeughälften zum Stahlhohlprofil im Spritzgießwerkzeug bzw. Presswerkzeug so ausgeführt, dass ein um bis zu +5% größeres Stahlhohlprofilumfangsmaß UH über die in **bI**. beschriebene Verpressung hinaus auf das gleiche in **bI**. beschriebene Kavitätsumfangsmaß UW zusätzlich verpresst wird;

> **bIII.** Die in **bI**. und **bII**. genannten Kontaktflächen der wenigstens zwei Werkzeughälften im Spritzgießwerkzeug bzw. Presswerkzeug umfassen das Stahlhohlprofil bei geschlossenem Werkzeug in seinem gesamten Umfang und weisen vorzugsweise eine Breite, d. h. eine Ausdehnung in axialer Richtung des Stahlhohlprofils gesehen, im Bereich von 1,0 bis 50,0mm auf, bevorzugt 3,0 bis 25,0mm, besonders bevorzugt 5,0 bis 10,0mm;

> **bIV.** In einer Ausführungsform sind die Kontaktflächen der wenigstens zwei Werkzeughälften zum Stahlhohlprofil im Spritzgießwerkzeug bzw. Presswerkzeug so ausgeführt, dass diese Bereiche im Werkzeug durch gehärtete Einsätze dargestellt werden. Vorzugsweise weisen die gehärteten Einsätze eine Härte nach Rockwell im Bereich von 50 bis 62 HRC auf. Damit liegt die Härte im Bereich üblicher Biege- und Stanzwerkzeuge.
> Siehe: **https://de.wikipedia.org/wiki/Rockwell_(Einheit);**

> **bV**. Das Spritzgießwerkzeug bzw. Presswerkzeug muss zwischen seinen Kontaktflächen außerhalb der wenigstens einen Kavität einen Freiraum um das Stahlhohlprofil herum bieten. Vorzugsweise beträgt bzw. liegt dieser Freiraum im Bereich von 1,0 bis 10,0 mm.

**Verfahrensschritt c)**

Im Verfahrensschritt c) wird wenigstens ein Stahlhohlprofil mit einem Verhältnis von Durchmesser zu Wanddicke im Bereich von 5:1 bis 300:1, vorzugsweise im Bereich von 10:1 bis 200:1, besonders bevorzugt im Bereich von 10:1 bis 100:1, bereitgestellt. Vorzugsweise ist dessen Stahlhohlprofilaußenmaß C um einen Bereich von 0,1 bis 5% größer ist, als das Werkzeugmaß A der Kavität und dessen Stahlhohlprofilaußenmaß D um einen Bereich von 0,1 bis 5% kleiner, als das Werkzeugmaß B der wenigstens einen Kavität und dessen Stahlhohlprofilumfangsmaß UH entspricht dem in Verfahrensschritt b) genannten Kavitätsumfangsmaß UW. Erfindungsgemäß beziehen sich die Angaben zu den Stahlhohlprofilaußenmaßen C und D des in Verfahrensschritt c) bereitzustellenden Stahlhohlprofils auf 90° in Richtung zur Längsachse des Stahlhohlprofils gesehen, und die Angabe zu UH bezieht sich auf den Bereich von Stahlhohlprofilaußenmaß C und D.

Ein erfindungsgemäß einzusetzendes Stahlhohlprofil kann nach verschiedenen Verfahren hergestellt werden, verschiedene Querschnittsformen aufweisen und aus verschiedenen Materialien bestehen. Vorzugsweise wird zu dessen Herstellung wenigstens eine der Techniken Strangpressen, Strangziehen, Nahtlosziehen, Längsschweißen, eingesetzt.

Ein erfindungsgemäß einzusetzendes dünnwandiges Stahlhohlprofil weist vorzugsweise einen kreisrunden, elliptischen, oder polygonförmigen - dreieckigen, viereckigen, fünfeckigen etc. bis hin zu einem vieleckigen - Querschnitt auf.

Dünnwandig im Sinne der vorliegenden Erfindung bedeutet vorzugsweise ein Verhältnis von Durchmesser eines erfindungsgemäß einzusetzenden Stahlhohlprofils zu dessen Wanddicke im Bereich von 5:1 bis 300:1, besonders bevorzugt im Bereich von 10:1 bis 200:1, ganz besonders bevorzugt im Bereich von 10:1 bis 100:1.

Vorzugsweise weist ein in Verfahrensschritt c) bereitzustellendes Stahlhohlprofil eine Wanddicke im Bereich von 0,1 bis 10,0mm auf. Ein erfindungsgemäß einzusetzendes Stahlhohlprofil weist vorzugsweise wenigstens zwei Öffnungen, jeweils eine Öffnung an den Stirnseiten, auf. Erfindungsgemäß bevorzugt ist das Stahlhohlprofil ein Hohlzylinder.

Erfindungsgemäß wird ein Hohlprofil aus Stahl eingesetzt. Bei Stahl handelt es sich um Legierungen des Eisens. Erfindungsgemäß bevorzugt einzusetzende Stähle sind durch die Normen **DIN EN 10020, DIN EN 10208, DIN EN 10216, DIN EN 10217 und DIN EN 10130** definiert.

Typische Verfahren der Halbzeugherstellung erfindungsgemäß einzusetzender Stahlhohlprofile sind dem Fachmann als Strangpressen, Walzen und Rollformen bekannt.

Vorzugsweise weisen erfindungsgemäß einzusetzende Stahlhohlprofile eine Bruchdehnung >3% auf. Die Bruchdehnung ist ein Kennwert der Werkstoffwissenschaften, der die bleibende Verlängerung der Zugprobe nach dem Bruch, bezogen auf die Anfangsmesslänge, angibt. Sie charakterisiert die Verformungsfähigkeit bzw. Duktilität eines Werkstoffes und kann, entsprechend dem charakteristischen mechanischen Verhalten der Werkstoffarten, unterschiedlich definiert und auch mit unterschiedlichen Symbolen bezeichnet sein. Die Bruchdehnung ist die auf die Anfangsmesslänge einer Probe im Zugversuch bezogene bleibende Längenänderung nach erfolgtem Bruch. Die Anfangsmesslänge wird vor dem Zugversuch durch Messmarken auf der Zugprobe festgelegt. Für Stahl gilt dabei die ISO 6892. Siehe: **https://de.wikipedia.org/wiki/Bruchdehnung.**

Sollten andere Herstellungsverfahren als die zuvor genannten Hohlprofil-Herstellungsverfahren zwecks einer Fertigungstoleranzminimierung angewendet werden, so können auch Stähle mit einer Bruchdehnung <3% im erfindungsgemäßen Verfahren angewendet werden.

Erfindungsgemäß bevorzugt werden Stahlrundrohre, Stahlrechteckrohre oder Stahlvierkantrohre als Hohlprofil eingesetzt. Derartige Rohre werden beispielsweise von ThyssenKrupp Schulte GmbH, ThyssenKrupp Allee 1, 45143 Essen, Deutschland, angeboten.

**Verfahrensschritt d) & e)**

Verfahrensschritt d) betrifft das Bereitstellen einer Schweißanlage und Verfahrensschritt e) den Auftrag sowie das Verbinden des wenigstens einen Stahlverbindungselements mit dem Stahlhohlprofil mittels der in Verfahrensschritt d) bereitgestellten Schweißanlage. Die Verbindung der beiden Komponenten erfolgt in der Weise, dass diese die an sie gestellten Anforderungen über eine erwartete Lebensdauer erfüllen können. Dazu müssen die Schweißpunkte anforderungsgerechte Qualitätskriterien oder Gütemerkmale erfüllen. Generelle Festlegungen zu den Gütemerkmalen können nicht getroffen werden, denn diese sind immer eng an die jeweiligen Bauteilanforderungen gebunden. Zu den Gütekriterien gehören

- geometrisch messbare Größen wie Punktdurchmesser $d_P$ nach einer Werkstattprüfung, Linsendurchmesser $d_L$ nach Makroquerschliff, Eindringtiefe, Eindrucktiefe der Elektroden, Spaltbreite zwischen den Blechen;
- messbare Festigkeitswerte, die an ein spezielles Prüfverfahren gebunden sind wie Schälkraft, Kopfzugkraft, Scherzugkraft und Torsionsmoment;
- subjektiv einzuschätzende Größen die in Betriebskontrollen ermittelt werden, wie Ultraschall-A-Bild, Spritzerfreiheit, Oberflächenaussehen, schiebende Elektrode, Randschweißung.

Die Einhaltung der Gütewerte wird durch Prüfverfahren und/oder Betriebskontrollen zerstörend oder zerstörungsfrei ermittelt. Für die Durchführung zerstörender Prüfung gilt das DVS-Merkblatt 2916. Brucharten beim Widerstandspunktschweißen (nach DVS-Merkblatt 2916-1 in Anlehnung an die AWS D8.1). Der Linsendurchmesser einer Schweißverbindung wird nach zerstörender Prüfung durch Scher-, Abroll- oder Torsionsversuch gemessen. Die EN ISO 14329 und MBN 10382 unterscheiden dabei den Mischbruch, Ausknöpfbruch, und Scherbruch. Siehe auch: **https://de.wikipedia.org/wiki/Schwei%C3%9Fpunktqualit%C3%A4t**

Werkstattprüfverfahren sind die einfachsten Methoden zum Beurteilen der Eigenschaften von Schweißverbindungen. Der Einsatzbereich reicht von der Kontrolle von Einstellwerten bis zur Prüfung fertiger Bauteile. Sie erfordern nur geringe Investitionen für die erforderlichen Prüf- und Messwerkzeuge, die Durchführung ist relativ schnell und einfach. In Werkstattprüfverfahren werden die Schweißverbindungen in einfachen Prüfvorrichtungen oder direkt am Objekt bis zum Bruch beansprucht (Ausnahme: Keilprüfung). Während der Prüfung werden keine Messwerte aufgenommen. Am zerstörten Objekt können die definierten Eigenschaften Bruchart und Schweißpunktdurchmesser ermittelt und dokumentiert werden. Bei den Werkstattprüfungen sind keine Aussagen über die Festigkeit der Schweißverbindungen möglich. Nicht eindeutig definierte und nicht konstante Prüfbedingungen können dabei zu unterschiedlichen Prüfergebnissen führen, sowohl in Bezug auf den ermittelten Schweißpunktdurchmesser, als auch auf die Bruchart. Zu den Werkstattprüfverfahren zählen Abroll- oder Schälprüfung, zerstörende Meißelprüfung, nicht zerstörende Keilprüfung, Torsionsversuch. Die Durchführung dieser Testverfahren regelt die EN ISO 10447. Für die Laborprüfung werden definierte Proben vorbereitet. Probenmaße und die Durchführung der Laborprüfverfahren werden in jeweils gesonderten Normen beschrieben:

- Schälzugprüfung in der EN ISO 14270

- Kopfzugprüfung in der DIN EN ISO 14272

- Scherzugprüfung in der DIN EN ISO 14273

- Torsionsprüfung in der DIN EN ISO 17653

Im Automobilbau gelten oftmals gesonderte Festlegungen. Quantitative Anforderungen an die Schweißpunktqualität werden für verschiedene Anwendungen sehr unterschiedlich festgelegt. Im DVS-Merkblatt 2902-3 wird als Mindestmaß für den Linsendurchmesser ein Wert von: $d_L = 3,5\ \sqrt{t_{min}}$ empfohlen. Für spezielle Anwendungen im Automobilbau können Schweißpunktklassen festgelegt sein:

- Sonderpunkt: Versagen kann zu Schadensereignissen führen, die die Gesamtsicherheit beeinträchtigen können: $d_L=3,5\ \sqrt{t_{min}}$ bzw. $d_P=4\sqrt{t_{min}}$

- Fertigungspunkt: Schweißpunkte, die für einen kontinuierlichen Fertigungsablauf und -prozess benötigt werden. Die Funktion des Bauteils ist auch ohne diese Punkte uneingeschränkt gegeben. Sie müssen die Anforderung $d_L=3,5\ \sqrt{t_{min}}$ bzw. $d_P=4\sqrt{t_{min}}$ nicht erfüllen.

- Normpunkt: Versagen beeinträchtigt die Gesamtfunktion des Fahrzeugs nicht oder nur unwesentlich. $d_L=3,5\ \sqrt{t_{min}}$ bzw. $d_P=4\sqrt{t_{min}}$

Bei der Festlegung von Punktdurchmessern muss berücksichtigt werden, dass oftmals keine enge Korrelation zwischen dem Punktdurchmesser und der tatsächlichen Punktfestigkeit besteht, besonders bei höherfesten und hochfesten Stählen können große Abweichungen auftreten. Der Schweißpunkt knöpft nicht aus, sondern es kommt zu sehr verschiedenen Brucharten, so auch zu Scherbrüchen von Schweißpunkten mit ausreichender Punktfestigkeit.

Erfindungsgemäß bevorzugt erfolgt die Verbindung des wenigstens einen Stahlverbindungselements mit dem Stahlhohlprofil durch Schutzgasschweißen, insbesondere Metallschutzgasschweißen. Siehe hierzu: **https://wiki.induux.de/Schutzgasschwei%C3%9Fen**

Schutzgasschweißen ist ein Schweißverfahren, das zur Gruppe der Schmelzschweißverfahren zählt. Es ordnet sich in die Unterkategorie des Lichtbogenschweißens ein, da mit einem offenen Lichtbogen in geschützter Atmosphäre gearbeitet wird. Besonders für das Schutzgasschweißen ist die Anwendung von Schutzgasen (Argon, Helium, Stickstoff oder Kohlenstoffdioxid/$CO_2$). Sie schützen durch ihr Abschirmen der Umgebungsluft vor chemischen Reaktionen. Es gibt verschiedene Varianten von Schutzgasschweißen. Dazu gehören: Metallschutzgasschweißen (MSG) mit Metall-Inertgasschweißen (MIG) und Metall-Aktivgasschweißen (MAG), Wolframinertgasschweißen (WIG/TIG), Orbitalschweißen und Plasmaschweißen.

Beim Schutzgasschweißen werden verschiedene Verfahren angewandt. Es kann dabei entweder ein inertes, aktives oder Mischgas verwendet werden, das eine schützende Umgebung bildet. Grundsätzlich aber werden folgende Verfahren unterschieden:

**Metallschutzgasschweißen (MSG)**

Beim teilmechanischen Metallschutzgasschweißen wird mit inerten oder reaktionsfreudigen Gasen auf verschiedene Art gearbeitet. Inert bedeutet, dass die Gase keine Reaktion mit der Schmelze eingehen; die reaktionsfreudigen hingegen gehen die gewollte chemische Reaktion ein. Die beiden hierfür angewandten Verfahren sind das **Metall-Inertgasschweißen** und **Metall-Aktivgasschweißen** - kurz: **MIG** und **MAG.** Diese Schweißverfahren werden für die meisten Werkstoffe eingesetzt. MSG bezeichnet ein Lichtbogenschweißverfahren, wobei ein abschmelzender Schweißdraht stetig auf die Werkstücke nachgeführt wird. Angetrieben wird er von einem Motor, bei dem die Geschwindigkeit beliebig einstellbar ist. Die Dicke des eingesetzten Schweißdrahts kann variieren und liegt im Schnitt bei ca. 1mm. Während dieses Prozesses wird das inerte oder aktive Gas eingesetzt, wodurch das (metallische) Werkstück vor Oxidation geschützt wird. So kann die Schweißnaht nicht oder nur wenig ungewollt beeinflusst werden. Der Unterschied zwischen MIG und MAG Schweißen ist Folgender:

- Beim Metall-Inertgasschweißen (MIG Schweißen) brennt ein Lichtbogen zwischen Werkstück und Drahtelektrode. Das eingesetzte Schutzgas besteht beim MIG Schweißen meist aus Argon, Helium oder einem Schutzgasgemisch. Man setzt das MIG-Schweißverfahren oftmals bei Nichteisen-Metallen (NE-Metalle) wie Aluminium ein.

- Das Metall-Aktivgasschweißen (MAG Schweißen) funktioniert gleich wie das MIG-Schweißen. Allerdings wird hierbei mit Kohlendioxid oder Mischgasen gearbeitet. Bei den Mischgasen wird in den meisten Fällen Argon eingesetzt. Verwendung findet das MAG Schweißverfahren bei der Stahlbearbeitung.

Weitere Möglichkeiten, wie das Einbringen von Fülldrähten, helfen, das Schweißvolumen zu erhöhen und Oxidation der Schweißnaht zu verhindern.

**MIG MAK Punktschweißen:**

Für das Punktschweißen nach dem MIG oder MAG Verfahren helfen spezielle Punktscheißdüsen das Schweißergebnis zu verbessern.

Ebenfalls erfindungsgemäß bevorzugt erfolgt die Verbindung des wenigstens einen Stahlverbindungselements mit dem Stahlhohlprofil durch das Lichtbogenpressschweißverfahren, insbesondere dem Lichtbogenbolzenschweißverfahren mit Hubzündung. Siehe hierzu:

**https://de.wikipedia.org/wiki/Lichtbogenbolzenschwei%C3%9Fen**

Beim Lichtbogenbolzenschweißen wird zwischen einer Stirnfläche des Bolzens und dem Werkstück ein Lichtbogen gezündet, wobei beide Teile werden lokal angeschmolzen und anschließend unter geringem Anpressdruck gefügt werden. Das Lichtbogenbolzenschweißen wird nach der Art der Lichtbogenzündung unterteilt in Bolzenschweißen mit Hubzündung und Bolzenschweißen mit Spitzenzündung. Beide Verfahren unterscheiden sich in der Schweißflächengeometrie der Bolzen, dem Verfahrensablauf, der Gerätetechnik und teilweise im Anwendungsgebiet. Die sogenannte Blaswirkung kann sich wie bei anderen Lichtbogenschweißverfahren störend bemerkbar machen.

**Verfahrensschritt f)**

Neben der Gestaltung des in Verfahrensschritt c) bereitzustellenden Stahlhohlprofils ist ebenso die Gestaltung des in Verfahrensschritt b) bereitzustellenden Spritzgießwerkzeugs bzw. Presswerkzeugs wichtig, damit das erfindungsgemäße Verfahren, insbesondere das Einlegen und das Abdichten der wenigstens einen Kavität, problemlos funktioniert.

Das Einlegen des Stahlhohlprofils in die wenigstens eine Kavität in Verfahrensschritt f) erfolgt dabei **ohne** dass eine Aufweitung des Stahlhohlprofils selber erfolgt. Das Abdichten der Fuge zwischen Stahlhohlprofil und der Kavität des Spritzgießwerkzeugs bzw. Presswerkzeugs, die sich an den mit Kunststoffauftrag zu versehenden Stahlhohlprofilabschnitt anschließt, erfolgt allein beim Schließen des Spritzgießwerkzeugs bzw. Presswerkzeugs durch Formänderung des Umfangs des Stahlhohlprofils, wobei der Stahlhohlprofilumfang UH selber unverändert bleibt.

Im Falle des bevorzugten Einsatzes von Stahlhohlprofilen mit rundem Umfang, wobei das Stahlhohlprofil die Form eines Rohres bzw. Hohlzylinders hat, erfolgt eine Formänderung vorzugsweise zu einer Ellipse. Im Falle des Einsatzes von Stahlhohlprofilen mit elliptischem Umfang erfolgt die Formänderung vorzugsweise zu einem runden Umfang.

Vorzugsweise liegt das Verhältnis des Stahlhohlprofilumfangsmaßes UH zum inneren Kavitätsumfangsmaß UW bei 1 : 1. Es ist für den Fachmann außerordentlich überraschend, dass allein durch die Schließbewegung des Spritzgießwerkzeugs bzw. Presswerkzeugs und die daraus resultierende Formänderung des Stahlhohlprofils gegenüber dem inneren Umfang der Werkzeugkavität UW der Spalt bzw. die Fuge zuverlässig verschlossen und damit für den Spritzgießvorgang bzw. Pressvorgang abgedichtet wird, und selbst bei einem toleranzbedingten Übermaß des Stahlhohlprofilumfangs UH um bis zu +5%, überschüssiges Material der Stahlhohlprofilwandung nicht in die Trennebenen des Spritzgießwerkzeugs bzw. Presswerkzeugs hineingepresst wird. Dadurch ist sichergestellt, dass es weder zu Beschädigungen des Werkzeugs, insbesondere zu Beschädigungen der Trennebenen, noch zu Beschädigungen des Stahlhohlprofils selbst kommen kann. Diese Eigenschaft des erfindungsgemäßen Verfahrens, die Formänderung des Stahlhohlprofils mit dem Schließen des Spritzgießwerkzeugs bzw. Presswerkzeugs und damit gleichzeitig das Abdichten der Werkzeugkavität gegenüber der Stahlhohlprofilaußenfläche erlaubt das anschließende und örtlich begrenzte Auftragen von Kunststoff auf das Metall basierte Stahlhohlprofil in Verfahrensschritt h) ohne im Innern des Stahlhohlprofils zusätzlich positionierte und dem Spritz- bzw. Pressdruck entgegenwirkende Hilfsmittel und damit gegenüber dem Stand der Technik ohne zusätzliche Verfahrensschritte und unter deutlich verkürzten Zykluszeiten.

Vorzugsweise weisen ein erfindungsgemäß einzusetzendes Spritzgießwerkzeug bzw. Presswerkzeug und auch ein erfindungsgemäß einzusetzendes Stahlhohlprofil folgende Merkmale auf, damit sich Letzteres mit all seinen Maß- und Formtoleranzen ohne Zwang in das in Verfahrensschritt b) bereitgestellte Werkzeug einlegen lässt:

**fl.** Das Spritzgießwerkzeug bzw. Presswerkzeug muss so beschaffen sein, dass es die Spritzgießwerkzeugkavitäten bzw. Presswerkzeugkavitäten zu den Bereichen des Stahlhohlprofils, in denen in Verfahrensschritt h) kein Auftrag von Kunststoff erfolgen wird, beim Schließen des Werkzeugs abdichtet. Dazu sind im Spritzgießwerkzeug bzw. Presswerkzeug an den axialen Enden der wenigstens einen Kavität Kontaktflächen im Werkzeug notwendig, die das Stahlhohlprofil während des Schließens des Werkzeugs vom Stahlhohlprofilaußenmaß C auf das Werkzeugmaß A verpressen, wodurch sich gleichzeitig das Stahlhohlprofilaußenmaß D auf das Werkzeugmaß B ändert, aber das Stahlhohlprofilumfangsmaß UH gleich dem Kavitätsumfangsmaß UW bleibt;

**fII.** In einer Ausführungsform sind die Kontaktflächen der wenigstens zwei Werkzeughälften zum Stahlhohlprofil im Spritzgießwerkzeug bzw. Presswerkzeug so ausgeführt, dass ein um + 5% größeres Stahlhohlprofilumfangsmaß UH über die in **fI.** beschriebene Verpressung hinaus auf das gleiche in **fI.** beschriebene Kavitätsumfangsmaß UW zusätzlich verpresst wird;

**fIII.** Die in **fI.** und **fII.** genannten Kontaktflächen der wenigstens zwei Werkzeughälften im Spritzgießwerkzeug bzw. Presswerkzeug umfassen das Stahlhohlprofil bei geschlossenem Werkzeug in seinem gesamten Umfang und weisen vorzugsweise eine Breite, d. h. eine Ausdehnung in axialer Richtung des Stahlhohlprofils gesehen, im Bereich von 1,0 bis 50,0mm auf, besonders bevorzugt 3,0 bis 25,0mm, ganz besonders bevorzugt 5,0 bis 10,0mm;

**fIV**. In einer Ausführungsform sind die Kontaktflächen der wenigstens zwei Werkzeughälften zum Stahlhohlprofil im Spritzgießwerkzeug bzw. Presswerkzeug so ausgeführt, dass diese Bereiche im Werkzeug durch gehärtete Einsätze dargestellt werden. Diese gehärteten Einsätze weisen vorzugsweise eine Härte nach Rockwell im Bereich von 50 bis 62 HRC auf. Damit liegt die Härte im Bereich üblicher Biege- und Stanzwerkzeuge. Siehe hierzu: **https://de.wikipedia.org/wiki/Rockwell_(Einheit);**

fV. Vorzugsweise bietet das Spritzgießwerkzeug bzw. Presswerkzeug zwischen seinen Kontaktflächen außerhalb der Spritzgießwerkzeugkavitäten- bzw. Presswerkzeugkavitäten einen Freiraum rund um das Stahlhohlprofil herum. Vorzugsweise beträgt bzw. liegt dieser Freiraum im Bereich von 1,0 bis 10,0mm.

**Verfahrensschritt g)**

Im Verfahrensschritt g) erfolgt das Schließen der wenigstens einen Kavität des Spritzgießwerkzeugs bzw. Presswerkzeugs sowie das Verpressen des Stahlhohlprofils mit der Werkzeugschließbewegung in Schließrichtung der wenigstens einen Kavität, wobei eine Formänderung des in c) bereitgestellten Stahlhohlprofils dahingehend stattfindet, dass die Außenfläche des Stahlhohlprofils nach Beendigung des Schließvorgangs der Innenform der Kavität des in Verfahrensschritt b) bereitgestellten Spritzgießwerkzeugs bzw. Presswerkzeugs, im Bereich der Kontaktflächen an den axialen Enden der wenigstens einen Spritzgießwerkzeugkavität bzw. Presswerkzeugkavität entspricht. Durch das Schließen der wenigstens einen Kavität wird das Außenmaß C gleich dem Werkzeugmaß A und das Außenmaß D gleich dem Werkzeugmaß B. Das Stahlhohlprofilumfangsmaß UH entspricht weiterhin dem Kavitätsumfangsmaß UW.

Mittels der unter Verfahrensschritt b) beschriebenen Kontaktflächen im Spritzgießwerkzeug bzw. Presswerkzeug wird im Verfahrensschritt g) das Stahlhohlprofil eindeutig in der wenigstens einen Kavität gehalten und die für das Spritzgießen bzw. für das Pressen vorgesehenen Kavitäten am Stahlhohlprofil werden abgedichtet.

Für das Schließen des Spritzgießwerkzeugs bzw. Presswerkzeugs wird eine Presskraft benötigt, die das Stahlhohlprofil in eine durch die Ausgestaltung der Kavität des Spritzgieß- bzw. Presswerkzeugs definierte neue Form presst, sowie eine Schließkraft für den Spritzgießprozess, um die wenigstens eine Kavität abzudichten. Die Höhe der Presskraft richtet sich nach der Form des in Verfahrensschritt c) bereitgestellten Stahlhohlprofils. Ferner sind Gestalt, Dimensionen, Wandstärke/Wanddicke und Materialbeschaffenheit des Stahlhohlprofils für die Vorauskalkulation der anzuwendenden Presskraft entscheidend, die der Fachmann bei der Auslegung des erfindungsgemäßen Prozesses berücksichtigen muss.

Die für das Verpressen des Stahlhohlprofils in Verfahrensschritt g) anzuwendende Presskraft liegt vorzugsweise unterhalb der Schließkraft des Spritzgießwerkzeugs im Falle, dass ein Spritzgießverfahren für den Kunststoffauftrag angewendet wird.

Im Falle des Aufpressens eines Kunststoffauftrags durch Formpressen liegt die für das Verpressen des Stahlhohlprofils in Verfahrensschritt g) anzuwendende Presskraft im Bereich der Schließkraft des zu diesem Zweck einzusetzenden Presswerkzeugs +/- 10%.

Die Höhe der Schließkraft des Spritzgießwerkzeugs bzw. Presswerkzeugs richtet sich nach der projizierten Fläche für den Kunststoffauftrag in Verfahrensschritt h) und den Einspritzdrücken die benötigt werden, um die entsprechenden Kunststoffe im Verfahrensschritt h) einzuspritzen bzw. zu verpressen.

Erfindungsgemäß bevorzugt erfolgt das Verpressen in Verfahrensschritt g) bis folgendes gilt:

Stahlhohlprofilaußenmaß C = Werkzeugmaß A **und**

Stahlhohlprofilaußenmaß D = Werkzeugmaß B **und**

Stahlhohlprofilumfangsmaß UH = Kavitätsumfangsmaß UW.

In diesem Fall ist die Kavität zum Stahlhohlprofil umfänglich abgedichtet und das Werkzeug an den Kontaktflächen am geringsten belastet.

Tritt der Fall ein, dass das Stahlhohlprofilaußenmaß C oder D oder das Stahlhohlprofilumfangsmaß UH zu klein ist und die Verformung durch das Werkzeug nicht ausreicht, um als Ergebnis Stahlhohlprofilaußenmaß D = Werkzeugmaß B zu erreichen, so verbliebe ein Spalt. In diesem Fall müssen die Toleranzen des Stahlhohlprofils so gewählt werden, dass dieser Fall nicht eintrifft.

Ist das Stahlhohlprofilaußenmaß A oder das Stahlhohlprofilumfangsmaß UH zu groß gewählt, dann erreicht das Stahlhohlprofilaußenmaß D das Werkzeugmaß B bevor das Werkzeug vollständig geschlossen ist, was zu einer tangentialen Stauchung der Stahlhohlprofilwandung führt. Auch in diesem Fall sind deshalb die Toleranzen des Stahlhohlprofils so zu wählen, dass ein Stauchen maximal bis zur Druckdehnung des Materials eintritt, aber kein Ausweichen der Stahlhohlprofilwandung in Hohlräume zwischen die Trennflächen des Spritzgieß- bzw. Presswerkzeugs eintritt. In diesem Fall ist die Kavität zum Stahlhohlprofil ebenfalls umfänglich abgedichtet, aber das Werkzeug wird an den Kontaktflächen höher belastet.

### Verfahrensschritt h)

Im Verfahrensschritt h) erfolgt der Auftrag von Kunststoff in Form einer Schmelze auf die Außenwandung des Stahlhohlprofils. Die in Verfahrensschritt h) anzuwendende Höhe der Einspritz- und Nachdrücke, die Einspritzgeschwindigkeiten, die Umschaltzeiten zwischen Einspritzen und Nachdrücken, die Nachdrückzeiten, die Schmelze- und Werkzeugtemperaturen und das Restmassepolster des Kunststoffauftrags sind zudem abhängig von den einzusetzenden Kunststoffmaterialien, der Geometrie der mit Kunststoff aufzufüllenden Kavität(en), der Position des Auftrags am Stahlhohlprofil, im Falle des Spritzgusses des Angusses, und der Belastbarkeit des in Verfahrensschritt c) bereitgestellten und in Verfahrensschritt f) eingelegten Stahlhohlprofils, die der Fachmann bei der Auslegung des erfindungsgemäßen Prozesses im Voraus berücksichtigen muss.

Durch das Verpressen des Stahlhohlprofils im Verfahrensschritt g), insbesondere mittels der in Verfahrensschritt b) beschriebenen Werkzeugkontaktflächen, erzielt man eine Abdichtung des Spritzgießwerkzeugs bzw. Presswerkzeugs gegen Austritt des in Verfahrensschritt h) aufzutragenden Kunststoffauftrags zwischen mit Kunststoffauftrag und nicht mit Kunststoffauftrag beaufschlagten Bereichen des Stahlhohlprofils innerhalb der Werkzeugkavität. In einer Ausführungsform sind die Werkzeugkontaktflächen so ausgeführt, dass diese Bereiche im Werkzeug durch gehärtete Einsätze dargestellt werden.

Die in Verfahrensschritt f) unter Punkt **fIV.** beschriebene Ausführung gehärteter Werkzeugeinsätze dient im Verfahrensschritt g) der Reduzierung des Verschleißes der Werkzeugkontaktflächen, da dies die einzigen Kontaktstellen zwischen Spritzgießwerkzeug bzw. Presswerkzeug und Stahlhohlprofil sind und die gehärteten Werkzeugeinsätze vorzugsweise eine deutlich höhere Härte besitzen, als der Stahl des Stahlhohlprofils.

Der Auftrag von Kunststoff auf das wenigstens eine Stahlhohlprofil erfolgt in Verfahrensschritt h) vorzugsweise durch Spritzgießen oder Formpressen, insbesondere Spritzgießen.

### Kunststoffauftrag durch Spritzgießen

Nach **DIN 8580** werden Fertigungsverfahren zur Herstellung geometrischer fester Körper in sechs Hauptgruppen unterteilt. Das Spritzgießen ist die Hauptgruppe 2, dem Urformen zugeordnet. Es eignet sich insbesondere für Massenartikel. Die Nacharbeit beim Spritzgießen ist gering bzw. kann ganz entfallen und selbst komplizierte Formen und Konturen können in einem Arbeitsgang gefertigt werden. Das Spritzgießen als Fertigungsverfahren in der Kunststoffverarbeitung ist dem Fachmann prinzipiell bekannt; Siehe hierzu:

**https://de.wikipedia.org/wiki/Spritzgie%C3%9Fen.**

Beim Spritzgießen wird mit einer Spritzgießmaschine der zu verarbeitende Kunststoff verflüssigt bzw. plastifiziert und in eine Form, dem Spritzgießwerkzeug, unter Druck eingespritzt. Im Werkzeug geht der Kunststoff durch Abkühlung oder durch eine Vernetzungsreaktion wieder in den festen Zustand über und wird nach dem Öffnen des Werkzeugs als Fertigteil entnommen. Der Hohlraum bzw. die Kavität eines Werkzeugs bestimmt dabei die Form und die Oberflächenstruktur des erstarrten Kunststoffauftrags im Enderzeugnis, in der vorliegenden Erfindung im Kunststoff-Metall Verbundbauteil. Es sind heute durch Spritzgießen Erzeugnisse im Gewichtsbereich von wenigen zehntel Gramm bis zu einer Größenordnung von 150 kg herstellbar.

Das Spritzgießen erlaubt eine nahezu freie Wahl von Form und Oberflächenstruktur, insbesondere glatte Oberflächen, Narbungen für berührungsfreundliche Bereiche, Muster, Gravuren und Farbeffekte. Zusammen mit der Wirtschaftlichkeit macht dies das Spritzgießen zum weitverbreitetsten Verfahren zur Massenherstellung von Kunststoffteilen in praktisch allen Bereichen.

Eine Spritzgießapparatur umfasst wenigstens folgende Bauteile: 1. Schnecke 2. Einfülltrichter 3. Granulat 4. Plastifizierzylinder 5. Heizelemente 6. Werkzeug.

Innerhalb einer Spritzgießapparatur erfolgen die Schritte 1. Plastifizieren und Dosieren, 2. Einspritzen, 3. Nachdrücken und Abkühlen, und 4. Entformen.

#### 1. Plastifizieren und Dosieren

Der der für den Spritzguss vorzugsweise einzusetzende thermoplastische Kunststoff rieselt in Form eines Granulats in die Gänge einer rotierenden Schnecke ein. Das Granulat wird in Richtung Schneckenspitze gefördert und durch die Wärme des Zylinders und die Friktionswärme, die beim Zerteilen und Scheren des Materials entsteht, erwärmt und aufgeschmolzen. Die Schmelze sammelt sich vor der Schneckenspitze, da die Austrittsdüse zunächst geschlossen ist. Da die Schnecke axial beweglich ist, weicht sie durch den Druck zurück und schraubt sich ähnlich einem Korkenzieher aus der Masse heraus. Die Rückwärtsbewegung wird durch einen Hydraulikzylinder oder elektrisch gebremst, so dass sich in der Schmelze ein Staudruck aufbaut. Dieser Staudruck in Verbindung mit der Schneckenrotation verdichtet und homogenisiert den als Spritzgießmaterial zu verspritzenden Kunststoff.

Die Schneckenposition wird gemessen und sobald sich eine für das Werkstückvolumen ausreichende Spritzgießmaterialmenge angesammelt hat, ist der Dosiervorgang beendet und die Schneckenrotation wird eingestellt. Ebenso wird die Schnecke aktiv oder passiv entlastet, so dass die Schmelze dekomprimiert wird.

### 2. Einspritzen

In der Einspritzphase wird die Spritzeinheit an die Schließeinheit gefahren, mit der Austrittsdüse angedrückt und die Schnecke rückseitig unter Druck gesetzt. Dabei wird die Schmelze unter hohem Druck, vorzugsweise bei einem Druck im Bereich von 200 bis 2000bar, durch die geöffnete Austrittsdüse und den Anguss bzw. das Angusssystem des Spritzgießwerkzeugs in den formgebenden Hohlraum gedrückt. Eine Rückstromsperre verhindert dabei ein Zurückströmen der Schmelze in Richtung Einfülltrichter.

Während des Einspritzens wird versucht, ein möglichst laminares Fließverhalten der Schmelze zu erreichen. Das heißt, die Schmelze wird im Spritzgießwerkzeug dort, wo sie die gekühlte Werkzeugwand berührt, sofort abgekühlt und bleibt erstarrt "kleben". Die nachrückende Schmelze wird durch den dadurch verjüngten Schmelzkanal mit noch höherer Geschwindigkeit und noch mehr Scherdeformation gedrückt und vorne an der Schmelzfront zum Rand hin dehndeformiert. Es überlagert sich Wärmeabfuhr über die Werkzeugwand und Wärmezufuhr durch Schererwärmung. Die hohe Einspritzgeschwindigkeit erzeugt in der Schmelze eine Schergeschwindigkeit, welche die Schmelze leichter fließen lässt. Ein schnelles Einspritzen ist nicht anzustreben, denn durch hohe Schergeschwindigkeiten kann ein Molekülabbau innerhalb des Kunststoffs verstärkt auftreten. Auch die Oberfläche des durch Spritzguss herzustellenden Erzeugnisses, dessen Aussehen und schließlich der Orientierungszustand der Kunststoffmoleküle werden durch die Einspritzphase beeinflusst.

### 3. Nachdrücken und Abkühlen

Da das Werkzeug kälter ist als die Kunststoffmasse, vorzugsweise weist das Werkzeug eine Temperatur im Bereich von 20 bis 120°C auf und die Kunststoffmasse weist vorzugsweise eine Temperatur im Bereich von 200 bis 300°C auf, kühlt die Schmelze in der Form ab und erstarrt bei Erreichen des Erstarrungspunkts des jeweils eingesetzten Kunststoffs, vorzugsweise des Thermoplasten bzw. des Thermoplast basierten Compounds.

Compoundieren ist ein Begriff aus der Kunststofftechnik, welcher mit Kunststoffaufbereitung gleichzusetzen ist und den Veredelungsprozess von Kunststoffen durch Beimischung von Zuschlagstoffen (Füllstoffe, Additive usw.) zur gezielten Optimierung der Eigenschaftsprofile beschreibt. Die Compoundierung erfolgt vorzugsweise in Extrudern und umfasst die Verfahrensoperationen Fördern, Aufschmelzen, Dispergieren, Mischen, Entgasen und Druckaufbau. Siehe hierzu: **https://de.wikipedia.org/wiki/Compoundierung.**

Mit Compound bezeichnet man deshalb einen mit Füllstoffen oder Additiven versetzten Thermoplasten oder Duroplasten.

Das Abkühlen bei Erreichen des Erstarrungspunkts des jeweils eingesetzten Kunststoffs geht einher mit einer Volumenschwindung, die sich nachteilig auf Maßhaltigkeit und Oberflächenqualität des zu fertigenden Erzeugnisses, in der vorliegenden Erfindung des im Verfahrensschritt g) zu fertigenden und mit der Außenseite des Stahlhohlprofils formschlüssig zu verbindenden Kunststoffelements auswirkt. Um diese Schwindung teilweise zu kompensieren, wird auch nach Füllung der Form ein reduzierter Druck aufrechterhalten, damit Kunststoffmaterial nachfließen und die Schwindung ausgleichen kann. Dieses Nachdrücken kann solange erfolgen, bis der Anguss erstarrt ist.

Nach Beendigung des Nachdrückens kann die Austrittsdüse geschlossen werden und in der Spritzeinheit bereits der Plastifizier- und Dosiervorgang für das nächste Formteil beginnen. Das Kunststoffmaterial in der Form kühlt in der Restkühlzeit weiter ab, bis auch die Seele, der flüssige Kern des Kunststoffauftrags, erstarrt ist und eine zum Entformen hinreichende Steifigkeit erreicht ist. Dieser Vorgang wird auch als Solidifikation bezeichnet und erfolgt erfindungsgemäß für den Kunststoffauftrag im Verfahrensschritt i).

Die Spritzeinheit kann dann von der Schließeinheit wegbewegt werden, da kein Kunststoff mehr aus dem Anguss austreten kann. Dies dient dazu, einen Wärmeübergang von der wärmeren Austrittsdüse auf den kälteren Anguss zu verhindern.

### 4. Entformen

Zum Entformen eines durch Spritzguss erzeugten Kunststoff-Stahl-Verbundbauteils, bzw. des mit Kunststoffauftrag versehenen Stahlhohlprofils im erfindungsgemäßen Verfahrensschritt j), öffnet sich die Kavität und das Erzeugnis wird durch in die Kavität eindringende Stifte ausgeworfen und fällt entweder herunter (Schüttgut) oder wird durch Handlinggeräte aus dem Spritzgießwerkzeug entnommen und geordnet abgelegt oder direkt einer Weiterverarbeitung zugeführt. Vorzugsweise ist dafür das Spritzgieß- bzw. Presswerkzeug mit einer Auswerferseite versehen.

Der Anguss muss entweder durch separate Bearbeitung entfernt werden oder wird beim Entformen automatisch abgetrennt. Auch angussloses Spritzgießen ist mit Heißkanalsystemen, bei denen das Angusssystem ständig über der Erstarrungstemperatur des einzusetzenden Kunststoffs, vorzugsweise Thermoplasten, Duroplasten oder Compounds, bleibt und das enthaltene Material somit für den nächsten Schuss verwendet werden kann, möglich.

## Kunststoffauftrag durch Formpressen

Das Formpressen gehört zur Familie der Urformverfahren. Formpressen ist ein Herstellungsverfahren für Kunststoffe, geeignet für leicht gewölbte oder flache Bauteile. Haupteinsatzgebiet dieses Verfahrens ist die Automobilindustrie, wo es zur Produktion größerer Bauteile mit zweidimensionaler oder einfacher dreidimensionaler Struktur, insbesondere Motorhauben, Stoßfänger, Spoiler oder Heckklappen eingesetzt wird. Es können sowohl duroplastische, als auch thermoplastische Kunststoffe verarbeitet werden.

Zu Beginn des Formpressverfahrens wird die zu verarbeitende Formmasse in die vorgesehene, aufgeheizte Kavität eingebracht. Anschließend wird die Kavität unter Einsatz eines Druckkolbens geschlossen. Durch den Druck erlangt die Formmasse die vom Werkzeug vorgegebene Form. Bei duroplastischen Kunststoffen dient die Temperatur zur Beeinflussung des Aushärtevorgangs, bei Thermoplasten zum Schmelzen des Kunststoffs. Nach dem Abkühlen kann das fertige Erzeugnis aus dem Formwerkzeug entnommen und ggf. nach- oder weiterverarbeitet werden.

Das Formpressverfahren eignet sich vor allem für mittelgroße Stückzahlen, da in diesem Fall die Werkzeugkosten in der Regel geringer sind als zum Beispiel beim Spritzgießen. Das Formpressen kann auch zur Herstellung von Faserverbundwerkstoffen eingesetzt werden, u.a. zur Herstellung von faserverstärkten Kunststoffen. Siehe hierzu:

**https://de.wikipedia.org/wiki/Formpressen**

Ein bekanntes Formpressverfahren für thermoplastische Kunststoffe ist vor allem das D-LFT (Direct Long Fiber Thermoplastic Molding) Verfahren, wie es beispielsweise in DE-A 43 30 860 beschrieben ist.

Bekannte Formpressverfahren für duroplastische Kunststoffe sind vor allem das SMC-Verfahren (Sheet Molding Compound) und das BMC-Verfahren (Bulk Transfer Molding Compound). Ein SMC-Verfahren ist beispielsweise in EP 1 386 721 A1 beschrieben. Zu BMC-Verfahren siehe: Handbuch Spritzgießen, ISBN 978 3 446 15632 6, 1. Auflage 2001, Seiten 1022 - 1024, Carl Hanser Verlag**.**

## In Verfahrensschritt h) aufzutragende Kunststoffe

Im Verfahrensschritt h) einzusetzende bzw. aufzutragende Kunststoffe sind vorzugsweise thermoplastische oder duroplastische Kunststoffe, besonders bevorzugt thermoplastische Kunststoffe.

Bevorzugte thermoplastische Kunststoffe sind Polyamide (PA), Polyester, insbesondere Polybutylenterephthalat (PBT) oder Polyethylenterephthalat (PET), Polyethylen (PE), Polypropylen (PP) oder Polyvinylchlorid (PVC). Besonders bevorzugt wird als thermoplastischer Kunststoff im Verfahrensschritt e) Polyamid oder Polyester eingesetzt. Bevorzugt wird als Polyamid ein Polyamid 6 eingesetzt. Insbesondere wird als Polyester PBT eingesetzt. Bevorzugte duroplastische Kunststoffe sind Epoxidharze, vernetzbare Polyurethane oder ungesättigte Polyesterharze.

Vorzugsweise wird der Thermoplast oder Duroplast in Form eines Compounds eingesetzt.

Besonders bevorzugt wird der in Verfahrensschritt h) aufzutragende Kunststoffauftrag aus einem thermoplastischen Kunststoff mit wenigstens einem Füll- oder Verstärkungsstoff hergestellt. Bevorzugt wird wenigstens ein Füll- oder Verstärkungsstoff aus der Gruppe Kohlenstofffasern [CAS Nr. 7440-44-0], Glaskugeln oder Voll- oder Hohlglaskugeln, oder Glasfasern, oder gemahlenes Glas, insbesondere alle basierend auf Aluminium-Borsilikatglas mit einem Alkaligehalt 1% (E-Glas) [CAS Nr. 65997-17-3], amorphe Kieselsäure [CAS Nr. 7631-86-9], Calciumsilicat [CAS Nr. 1344-95-2], Calciummetasilicat [CAS Nr. 10101-39-0], Magnesiumcarbonat [CAS Nr. 546-93-0], Kaolin [CAS Nr. 1332-58-7], calciniertes Kaolin [CAS Nr. 92704-41-1], Kreide [CAS Nr.1317-65-3], Kyanit [CAS Nr. 1302-76-7], gepulverter oder gemahlener Quarz [CAS Nr. 14808-60-7], Glimmer [CAS Nr. 1318-94-1], Phlogopit [CAS Nr. 12251-00-2], Bariumsulfat [CAS Nr. 7727-43-7], Feldspat [CAS Nr. 68476-25-5], Wollastonit [CAS Nr. 13983-17-0] und Montmorillonit [CAS Nr. 67479-91-8] eingesetzt. Besonders bevorzugt werden Glasfasern eingesetzt.

Insbesondere bevorzugt werden auf 100 Massenanteile des thermoplastischen Kunststoffs Füll- oder Verstärkungsstoffe in Mengen im Bereich von 0,1 bis 150 Massenanteilen eingesetzt. Insbesondere ganz besonders bevorzugt werden auf 100 Massenanteile des thermoplastischen Kunststoffs Füll- oder Verstärkungsstoffe in Mengen im Bereich von 15 bis 150 Massenanteilen eingesetzt.

Insbesondere bevorzugt wird im Verfahrensschritt h) ein Kunststoffauftrag aus glasfaserverstärktem Polyamid 6 mit 15 bis 150 Massenanteilen Glasfasern auf 100 Massenanteile Polyamid im Spritzgießverfahren eingesetzt. Derartige Compounds sind erhältlich unter der Bezeichnung Durethan® bei der Lanxess Deutschland GmbH, Köln.

Auch ein in Verfahrensschritt h) aufzutragender duroplastischer Kunststoff enthält vorzugsweise wenigstens einen der oben genannten Füll- oder Verstärkungsstoffe. Bevorzugt enthält der duroplastische Kunststoff als Füll- oder Verstärkungsstoff Glasfasern oder Kohlenstofffasern. Insbesondere bevorzugt werden auf 100 Massenanteile des duroplastischen Kunststoffs 10 bis 150 Massenanteile Glasfasern oder Kohlenstofffasern als Füll- oder Verstärkungsstoff eingesetzt.

**Verfahrensschritt i)**

Im Verfahrensschritt i) erfolgt das Abkühlen des Kunststoffauftrags bzw. der Kunststoffüberspritzung, auch als Solidifikation bezeichnet. Der Begriff der Solidifikation beschreibt das Erstarren des in Verfahrensschritt h) aufgetragenen schmelzflüssigen Kunststoffs durch Abkühlen bzw. durch chemische Vernetzung zu einem Festkörper. Im Falle einer gleichzeitigen Formgebung können auf diese Weise direkt Funktionselemente, Strukturen und Flächen auf der Stahlhohlprofilaußenwandung aufgebracht werden.

In einer Ausführungsform der vorliegenden Erfindung und im Falle einer weiter oben beschriebenen Oberflächenbehandlung entsteht nach dem Erstarren der Kunststoffschmelze auf der äußeren Oberfläche des Stahlhohlprofils, vorzugsweise Stahlhohlzylinders, ein Kunststoffauftrag in Form eines geschlossenen Kunststoffrings mit einer strukturierten Innenfläche, die exakt das positive Abbild der Oberflächenstruktur der Außenwandung des Stahlhohlprofils mit wenigstens einem Stahlverbindungselement, darstellt.

Eine erfindungsgemäße schubsteife, schubfeste, hochbelastbare und formschlüssige Verbindung rund um die äußere Wandung des Stahlhohlprofils ist entstanden.

Weitere Details zum Verfahrensschritt i) wurden bereits oben im Abschnitt **"Nachdrücken und Abkühlen"** beschrieben.

**Verfahrensschritt j)**

Im Verfahrensschritt j) wird das fertige Kunststoff-Stahl-Verbundbauteil aus dem Spritzgieß- bzw. Presswerkzeug entnommen, nachdem mit Erstarren der Kunststoffschmelze der Druck im Kunststoffauftrag nicht mehr vorhanden ist und die Press- und Schließkraft mit dem Öffnen des Werkzeugs abgebaut wurde. Weitere Details wurden bereits oben im Abschnitt "**Entformen**" beschrieben.

**Kunststoff-Stahl-Verbundbauteil**

Erfindungsgemäß herzustellende Kunststoff-Stahl-Verbundbauteile (KSVs) werden in entsprechender Gestaltung vorzugsweise für den Kraftfahrzeugbau, insbesondere im Automobilbau eingesetzt. Die Erfindung betrifft daher auch die Verwendung der KSVs in Kraftfahrzeugen, insbesondere als Cross Car Beam. Bevorzugt handelt es sich beim erfindungsgemäßen Kunststoff-Stahl-Verbundbauteil um ein Kraftfahrzeug Karosserieteil, insbesondere um ein Cross Car Beam (CCB), auch als Instrumententafelquerträger bezeichnet. Bekannt sind Instrumententafelquerträger beispielsweise aus US 5 934 744 A oder US 8 534 739 B.

Ebenfalls bevorzugt handelt es sich beim Kunststoff-Stahl-Verbundbauteil um ein Kraftfahrzeug Karosserieteil, insbesondere um ein Frontend Modul Carrier, auch als "Grill Opening Reinforcement" oder als "Bolster" bezeichnet. Bekannt sind Frontend Modul Carrier beispielsweise aus EP 0 519 776 A1.

Im erfindungsgemäßen Kunststoff-Stahl-Verbundbauteil, auch aufgrund der zwei Komponenten als Hybridbauteil bezeichnet, versteifen und verstärken sich das Stahlhohlprofil und der im Verfahrensschritt h) mittels einer Kunststoffschmelze aufgetragene Kunststoffauftrag gegenseitig. Ferner dient der im Verfahrensschritt h) auf die äußere Wandung des Stahlhohlprofils aufgetragene Kunststoffauftrag darüber hinaus zur Funktionsintegration im Sinne einer System- bzw. Modulbildung zur Anbindung von Kunststoffstrukturen oder Kunststoffflächen.

**Patentansprüche**

1. Verfahren zur Herstellung eines Kunststoff-Stahl-Verbundbauteils **gekennzeichnet durch**

   a) Bereitstellen wenigstens eines, die Oberfläche des in c) bereitzustellenden Stahlhohlprofils vergrößernden Stahlverbindungselements, dessen äußere Abmessungen von Breite $B_{VE}$ und Höhe $H_{VE} \leq$ den äußeren Abmessungen des in h) aufzutragenden Kunststoffauftrags von Breite $B_{KU}$ und $H_{KU}$ sind und dessen Gewicht im Verhältnis zum in c) bereitzustellenden Stahlhohlprofil im Bereich von >100:1 pro kg Stahlhohlprofil liegt und dessen Kontaktfläche zum in h) aufzutragenden Kunststoffauftrag größer ist, als dessen Kontaktfläche zum in c) bereitzustellenden Stahlhohlprofil;

   b) Bereitstellen eines Spritzgieß- bzw. Presswerkzeugs mit wenigstens einer zu öffnenden Kavität und einem Werkzeugmaß A in Schließrichtung und einem Werkzeugmaß B rechtwinklig zur Schließrichtung des Spritzgieß- bzw. Presswerkzeugs und einem Kavitätsumfangsmaß UW, das dem Umfang der Kavität im Bereich der Spritzgieß- bzw. Presswerkzeugmaße A und B entspricht;

   c) Bereitstellen wenigstens eines Stahlhohlprofils, vorzugsweise mit einem Verhältnis von Durchmesser zu Wanddicke im Bereich von 5:1 bis 300:1, dessen Stahlhohlprofilaußenmaß C um einen Bereich von 0,1 bis 5% größer ist, als das Werkzeugmaß A, und dessen Stahlhohlprofilaußenmaß D um einen Bereich von 0,1 bis 5% kleiner ist als das Werkzeugmaß B und die Angaben zu C und D sich auf 90° in Richtung zur Längsachse des Stahlhohlprofils gesehen beziehen und dessen Stahlhohlprofilumfangsmaß UH dem Kavitätsumfangsmaß UW der wenigstens einen Presswerkzeug- bzw. Spritzgießwerkzeugkavität UW entspricht;

d) Bereitstellen einer Schweißanlage;

e) Verbinden des wenigstens einen in a) bereitgestellten Stahlverbindungselements mit dem wenigstens einen Stahlhohlprofil an den Stellen, an denen in h) der Kunststoffauftrag erfolgen soll mittels Schweißvorgang mit der in d) bereitgestellten Schweißanlage;

f) Einlegen des nach e) mit wenigstens einem Stahlverbindungselement verbundenen Stahlhohlprofils in die wenigstens eine Kavität des in b) bereitgestellten Spritzgieß- bzw. Presswerkzeugs;

g) Schließen der wenigstens einen Kavität des Spritzgieß- bzw. Presswerkzeugs sowie Verpressen des Stahlhohlprofils mit der Werkzeugschließbewegung in Schließrichtung der wenigstens einen Kavität, wobei eine Formänderung des in c) bereitgestellten Stahlhohlprofils stattfindet und die Außenfläche des Stahlhohlprofils nach Beendigung des Schließvorgangs der Innenform der Kavität des in b) bereitgestellten Spritzgieß- bzw. Presswerkzeugs im Bereich der Kontaktflächen an den axialen Enden der wenigstens einen Kavität entspricht, wobei das Stahlhohlprofilumfangsmaß UH gleich dem Kavitätsumfangsmaß UW bleibt;

h) äußeres Auftragen eines Kunststoffauftrags in Form einer Schmelze mit einem Druck im Bereich von 1 bar bis 1000 bar auf das Stahlhohlprofil an der Position des wenigstens einen Verbindungselements;

i) Abkühlen des auf das Stahlhohlprofil in h) aufgebrachten Kunststoffauftrags (Solidifikation), und

j) Entnehmen des fertigen Kunststoff-Stahl-Verbundbauteils aus dem Spritzgieß- bzw. Presswerkzeug.

2. Verfahren gemäß Anspruch 1, **dadurch gekennzeichnet, dass** eine formschlüssige Verbindung von Hohlprofil und Kunststoffauftrag radial in alle Richtungen um die Mittelachse des Hohlprofils herum und rotatorisch zu einer Achse rechtwinklig zur Mittelachse des Hohlprofils erzielt wird.

3. Verfahren gemäß Anspruch 1 oder 2, **dadurch gekennzeichnet, dass** zusätzlich die Verbindung von Hohlprofil und Kunststoffauftrag mit der Blockierung aller Freiheitsgrade, translatorisch in X-, Y- und Z-Richtung und rotatorisch um die X-, Y- und Z-Achse mittels einer Oberflächenbehandlung der äußeren Wandung des Hohlprofils erzielt wird.

4. Verfahren gemäß Anspruch 3, **dadurch gekennzeichnet, dass** als Oberflächenbehandlung wenigstens eine der Formen Auftrag wenigstens eines Haftvermittlers, Plasma-Oberflächenaktivierung, Laserstrukturierung, chemische Vorbehandlung und additives Auftrageverfahren ausgewählt wird.

5. Verfahren gemäß Anspruch 4, **dadurch gekennzeichnet, dass** als chemische Vorbehandlungsmittel der Einsatz von Säuren oder Basen und als additives Auftragsverfahren das thermische Metallaufspritzverfahren durchgeführt werden.

6. Verfahren gemäß einem der Ansprüche 1 bis 5, **dadurch gekennzeichnet, dass** das bereitzustellende Hohlprofil auf seiner Außenseite Strukturelemente aufweist.

7. Verfahren gemäß Anspruch 6, **dadurch gekennzeichnet, dass** es sich bei den Strukturelementen um Rippen handelt.

8. Verfahren gemäß einem der Ansprüche 1 bis 7, **dadurch gekennzeichnet, dass** vor oder nach dem Verfahrensschritt d) das Hohlprofil an wenigstens einer Position durch das Einwirken zusätzlicher Biegekräfte verformt wird.

9. Verfahren gemäß einem der Ansprüche 1 bis 8, **dadurch gekennzeichnet, dass** vor dem Verfahrensschritt g) das Hohlprofil an wenigstens einer Position durch das Einwirken zusätzlicher Biegekräfte verformt wird.

10. Verfahren gemäß Anspruch 9, **dadurch gekennzeichnet, dass** diese Verformung außerhalb des Werkzeugs an jeder beliebigen Position des Hohlprofils erfolgt.

11. Verfahren gemäß einem der Ansprüche 1 bis 10, **dadurch gekennzeichnet, dass** es sich bei dem Kunststoff-Metall Verbundbauteil um ein Kraftfahrzeug Karosserieteil, handelt.

12. Stahlhohlprofilhybridbauteil umfassend wenigstens ein durch Schweißen aufgetragenes Stahlverbindungselement und wenigstens einen an den Positionen des wenigstens einen Stahlverbindungselements durch Spritzguss oder Aufpressen aufgebrachten Kunststoffauftrag mit einer Blockierung der Freiheitsgrade radial in alle Richtungen um die Mittelachse des Stahlhohlprofils herum, rotatorisch um eine Achse rechtwinklig zur Mittelachse des Stahlhohlprofils und axial in Richtung der Mittelachse des Stahlhohlprofils.

13. Stahlhohlprofilhybridbauteil gemäß Anspruch 12, **dadurch gekennzeichnet, dass** das wenigstens eine einzusetzende Stahlhohlprofil ein Durchmesser/Wanddickenverhältnis im Bereich von 5:1 bis 300:1 aufweist.

14. Stahlhohlprofilhybridbauteil gemäß Anspruch 12 oder 13, **dadurch gekennzeichnet, dass** das wenigstens eine einzusetzende Stahlhohlprofil einen Durchmesser im Bereich von 2 bis 10cm aufweist.

15. Stahlhohlprofilhybridbauteil gemäß einem der Ansprüche 12 bis 14, **dadurch gekennzeichnet, dass** das wenigstens eine einzusetzende Stahlhohlprofil eine Wanddicke im Bereich von 0,1 bis 10mm aufweist.

16. Stahlhohlprofilhybridbauteil gemäß einem der Ansprüche 12 bis 15, **dadurch gekennzeichnet, dass** das wenigstens eine einzusetzende Stahlhohlprofil eine Länge im Bereich von 10 bis 250cm aufweist.

17. Verwendung des Stahlhohlprofilhybridbauteils gemäß einem der Ansprüche 12 bis 16 als Karosserieteil, vorzugsweise als Cross Car Beam.

**Fig.1**

**Fig.2**

Fig. 3

Fig. 4

**Fig. 5**

**Fig. 6**

Fig. 7

Fig. 8

Europäisches Patentamt
European Patent Office
Office européen des brevets

# EUROPÄISCHER RECHERCHENBERICHT

Nummer der Anmeldung

EP 19 16 5714

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 830 848 A1 (MAGNA INT INC [CA]) 4. Februar 2015 (2015-02-04) | 12,17 | INV. B29C45/14 |
| Y | * Absätze [0005, 0006, 0012, 0014-0016, 0018-0023, 0029]; Fig. 4-7; Ansprüche 4, 6, 8, 13 * | 1-13, 15-17 | |
| | ----- | | |
| Y,D | EP 3 369 544 A1 (LANXESS DEUTSCHLAND GMBH [DE]) 5. September 2018 (2018-09-05) * Absätze [0013, 0014, 0021, 0035-0038, 0044, 0096, 0097, 0100-0103, 0149, 0154]; Fig. 2; Ansprüche 1, 12, 14, 15 * | 1-13, 15-17 | |
| | ----- | | |
| A | DE 10 2014 019724 A1 (TECH UNIVERSITÄT DRESDEN [DE]) 17. September 2015 (2015-09-17) * Absatz [0037, 0060, 0079, 0080] * | 1,12,17 | |
| | ----- | | |
| A | DE 10 2011 010997 A1 (DAIMLER AG [DE]) 16. August 2012 (2012-08-16) * Absatz [0021-0023, 0026] * | 12,17 | |
| | ----- | | RECHERCHIERTE SACHGEBIETE (IPC) |
| A | DE 10 2017 006368 A1 (AUDI AG [DE]) 10. Januar 2019 (2019-01-10) * Absatz [0012, 0013, 0016] * | 12,17 | B29C |
| | ----- | | |
| A | WO 2004/091999 A1 (BAYER AG [DE]; DAJEK ULRICH [DE]; GOLDBACH HUBERT [DE]) 28. Oktober 2004 (2004-10-28) * Zusammenfassung * | 12,17 | |
| | ----- | | |
| A | DE 10 2014 014296 A1 (AUDI AG [DE]) 31. März 2016 (2016-03-31) * Absatz [0003, 0029] * | 1,12,17 | |
| | ----- | | |
| A | WO 2005/002825 A1 (BAYER AG [DE]; KLOCKE MARTIN [DE]) 13. Januar 2005 (2005-01-13) * Zusammenfassung * | 12,17 | |
| | ----- | | |

Der vorliegende Recherchenbericht wurde für alle Patentansprüche erstellt

| Recherchenort | Abschlußdatum der Recherche | Prüfer |
|---|---|---|
| München | 27. Juni 2019 | Härtig, Thomas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 16 5714

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-06-2019

| Im Recherchenbericht angeführtes Patentdokument | Datum der Veröffentlichung | Mitglied(er) der Patentfamilie | Datum der Veröffentlichung |
|---|---|---|---|
| EP 2830848 A1 | 04-02-2015 | CA 2866630 A1<br>EP 2830848 A1<br>US 2015056428 A1<br>WO 2013148959 A1 | 03-10-2013<br>04-02-2015<br>26-02-2015<br>03-10-2013 |
| EP 3369544 A1 | 05-09-2018 | CN 108527764 A<br>EP 3369544 A1<br>KR 20180101203 A<br>US 2018250855 A1 | 14-09-2018<br>05-09-2018<br>12-09-2018<br>06-09-2018 |
| DE 102014019724 A1 | 17-09-2015 | KEINE | |
| DE 102011010997 A1 | 16-08-2012 | KEINE | |
| DE 102017006368 A1 | 10-01-2019 | KEINE | |
| WO 2004091999 A1 | 28-10-2004 | AT 334864 T<br>CN 1774362 A<br>DE 10317217 A1<br>EP 1615816 A1<br>ES 2270371 T3<br>JP 2006524158 A<br>KR 20060005366 A<br>US 2004206017 A1<br>WO 2004091999 A1 | 15-08-2006<br>17-05-2006<br>04-11-2004<br>18-01-2006<br>01-04-2007<br>26-10-2006<br>17-01-2006<br>21-10-2004<br>28-10-2004 |
| DE 102014014296 A1 | 31-03-2016 | KEINE | |
| WO 2005002825 A1 | 13-01-2005 | CN 1878648 A<br>DE 10329710 A1<br>EP 1644175 A1<br>KR 20060025199 A<br>US 2005001354 A1<br>WO 2005002825 A1 | 13-12-2006<br>10-02-2005<br>12-04-2006<br>20-03-2006<br>06-01-2005<br>13-01-2005 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202018001599 U1
- WO 2018114731 A1
- EP 3369544 A1
- WO 2009077026 A1
- DE 4330860 A
- EP 1386721 A1
- US 5934744 A
- US 8534739 B
- EP 0519776 A1


**In der Beschreibung aufgeführte Nicht-Patentliteratur**

- **W. MICHAELI ; G. MENGES ; P. MOHREN.** Anleitung zum Bau von Spritzgießwerkzeugen. Carl Hanser Verlag München Wien, 1999
- Handbuch Spritzgießen. Carl Hanser Verlag, 2001, 1022-1024
- *CHEMICAL ABSTRACTS,* 7440-44-0
- *CHEMICAL ABSTRACTS,* 65997-17-3
- *CHEMICAL ABSTRACTS,* 7631-86-9
- *CHEMICAL ABSTRACTS,* 1344-95-2
- *CHEMICAL ABSTRACTS,* 10101-39-0
- *CHEMICAL ABSTRACTS,* 546-93-0
- *CHEMICAL ABSTRACTS,* 1332-58-7
- *CHEMICAL ABSTRACTS,* 92704-41-1
- *CHEMICAL ABSTRACTS,* 1317-65-3
- *CHEMICAL ABSTRACTS,* 1302-76-7
- *CHEMICAL ABSTRACTS,* 14808-60-7
- *CHEMICAL ABSTRACTS,* 1318-94-1
- *CHEMICAL ABSTRACTS,* 12251-00-2
- *CHEMICAL ABSTRACTS,* 7727-43-7
- *CHEMICAL ABSTRACTS,* 68476-25-5
- *CHEMICAL ABSTRACTS,* 13983-17-0
- *CHEMICAL ABSTRACTS,* 67479-91-8